(19) Europäisches Patentamt / European Patent Office / Office européen des brevets

(11) **EP 3 654 713 B1**

(12) **EUROPEAN PATENT SPECIFICATION**

(45) Date of publication and mention
of the grant of the patent:
**12.07.2023 Bulletin 2023/28**

(21) Application number: **18838555.3**

(22) Date of filing: **24.07.2018**

(51) International Patent Classification (IPC):
**H04W 72/04** $^{(2023.01)}$ **H04W 56/00** $^{(2009.01)}$

(52) Cooperative Patent Classification (CPC):
**H04L 5/0048; H04L 5/0078; H04L 27/0006;**
H04W 56/0015

(86) International application number:
**PCT/CN2018/096896**

(87) International publication number:
**WO 2019/020036 (31.01.2019 Gazette 2019/05)**

(54) **SYNCHRONIZATION SIGNAL BLOCK TRANSMISSION METHOD, ACCESS NETWORK DEVICE, AND TERMINAL DEVICE**

SYNCHRONISATIONSSIGNALBLOCKÜBERTRAGUNGSVERFAHREN, ZUGANGSNETZWERKVORRICHTUNG UND ENDGERÄT

PROCÉDÉ DE TRANSMISSION DE BLOC DE SIGNAUX DE SYNCHRONISATION, DISPOSITIF DE RÉSEAU D'ACCÈS ET DISPOSITIF TERMINAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2017 CN 201710632841**

(43) Date of publication of application:
**20.05.2020 Bulletin 2020/21**

(73) Proprietor: **Huawei Technologies Co., Ltd.
Longgang District
Shenzhen, Guangdong 518129 (CN)**

(72) Inventors:
• **ZHENG, Juan
Shenzhen
Guangdong 518129 (CN)**
• **GUAN, Lei
Shenzhen
Guangdong 518129 (CN)**
• **MA, Sha
Shenzhen
Guangdong 518129 (CN)**

(74) Representative: **Epping - Hermann - Fischer
Patentanwaltsgesellschaft mbH
Schloßschmidstraße 5
80639 München (DE)**

(56) References cited:
**WO-A1-2016/021880 WO-A1-2016/119684
CN-A- 105 991 497**

• **LG Electronics: "Discussion on the feasibility of SS burst set periodicity", 3GPP TSG-RAN WG4, no. R4-1706628, 19 June 2017 (2017-06-19), XP051308405, Qingdao, China**
• **Intel Corporation: "Further discussion on measurement gap for NR", 3GPP TSG-RAN WG4, no. R4-1706531, 19 June 2017 (2017-06-19), XP051308639, Qingdao, China**

## Description

## TECHNICAL FIELD

This application relates to the field of communications technologies, and in particular, to a synchronization signal block transmission method, an access network device, and a terminal device.

## BACKGROUND TECHNOLOGY

An unlicensed frequency band is a frequency band that can be used for free, and different devices may share a time-frequency resource on the unlicensed frequency band. Before an access network device and a terminal device transmit data by using an unlicensed frequency band, the terminal device first needs to synchronize with the access network device on the unlicensed frequency band: The access network device sends a synchronization signal to the terminal device, and the terminal device parses the synchronization signal to obtain time information, so that the terminal device synchronizes with the access network device.

In a wireless communications system, for example, a new radio (new radio, NR) system, operating on an unlicensed frequency band, a synchronization signal block (synchronization signal block, SSB) is a basic unit for transmission of a synchronization signal. The SSB includes a primary synchronization signal (primary synchronization signal, PSS) and a secondary synchronization signal (secondary synchronization signal, SSS). Optionally, the SSB may further include a physical broadcast channel (physical broadcast channel, PBCH). The synchronization signal sent by the access network device to the terminal device may be considered as a synchronization signal burst set (synchronization signals burst set, SS Burst Set), and the SS burst set includes a plurality of SSBs. Therefore, when the access network device sends the SS burst set to the terminal device, how to send a plurality of SSBs on a plurality of time-frequency resources is an urgent problem to be resolved.

In conclusion, a synchronization signal block transmission method is urgently required, to enable an access network device in a wireless communications system operating on an unlicensed frequency band to transmit a synchronization signal block to a terminal device. From WO 2016/119684 A1 data transmission methods compriseing sending PSS and/or SSS in the entire LTE OFDM symbol in occupied subframe resources are known.

## SUMMARY

Synchronization signal block transmission methods for a station and a terminal according to the independent claims are provided. Dependent claims provide preferred embodiments. Specifically, this application provides a synchronization signal block transmission method, an access network device, and a terminal device, so that an access network device in a wireless communications system operating on an unlicensed frequency band transmits a synchronization signal block to a terminal device.

## BRIEF DESCRIPTION OF DRAWINGS

FIG. 1 is a schematic structural diagram of a wireless communications system according to this application;

FIG. 2 is a schematic diagram of resource distribution in an SS burst set periodicity according to this application;

FIG. 3 is a schematic diagram of a time window for SSB sending in an SS burst set periodicity according to this application;

FIG. 4 is a schematic diagram of first SS burst distribution according to this application;

FIG. 5 is a schematic diagram of second SS burst distribution according to this application;

FIG. 6 is a schematic diagram of third SS burst distribution according to this application;

FIG. 7a is a first schematic diagram illustrating that a same synchronization signal block corresponds to a plurality of candidate resources according to this application;

FIG. 7b is a second schematic diagram illustrating that a same synchronization signal block corresponds to a plurality of candidate resources according to this application;

FIG. 7c is a third schematic diagram illustrating that a same synchronization signal block corresponds to a plurality of candidate resources according to this application;

FIG. 8 is a schematic diagram of distribution of a synchronization signal block according to an embodiment of this application;

FIG. 9 is a schematic flowchart of a synchronization signal block transmission method according to an embodiment of this application;

FIG. 10 is a schematic diagram of first candidate resource distribution according to an embodiment of this application;

FIG. 11 is a schematic diagram of second candidate resource distribution according to an embodiment of this application;

FIG. 12 is a schematic diagram of third candidate resource distribution according to an embodiment of this application;

FIG. 13a is a schematic diagram of fourth candidate resource distribution according to an embodiment of this application;

FIG. 13b is a schematic diagram of fifth candidate resource distribution according to an embodiment of this application;

FIG. 13c is a schematic diagram of sixth candidate resource distribution according to an embodiment of this application;

FIG. 14a is a schematic diagram of seventh candidate resource distribution according to an embodiment of this application;

FIG. 14b is a schematic diagram of eighth candidate resource distribution according to an embodiment of this application;

FIG. 15 is a schematic diagram of ninth candidate resource distribution according to an embodiment of this application;

FIG. 16 is a schematic diagram of tenth candidate resource distribution according to an embodiment of this application;

FIG. 17 is a schematic diagram of eleventh candidate resource distribution according to an embodiment of this application;

FIG. 18a is a schematic diagram of twelfth candidate resource distribution according to an embodiment of this application;

FIG. 18b is a schematic diagram of thirteenth candidate resource distribution according to an embodiment of this application;

FIG. 19 is a schematic diagram of fourteenth candidate resource distribution according to an embodiment of this application;

FIG. 20 is a schematic diagram of fifteenth candidate resource distribution according to an embodiment of this application;

FIG. 21 is a schematic diagram of sixteenth candidate resource distribution according to an embodiment of this application;

FIG. 22 is a schematic diagram of seventeenth candidate resource distribution according to an embodiment of this application;

FIG. 23 is a schematic diagram of eighteenth candidate resource distribution according to an embodiment of this application;

FIG. 24a is a schematic diagram of nineteenth candidate resource distribution according to an embodiment of this application;

FIG. 24b is a schematic diagram of twentieth candidate resource distribution according to an embodiment of this application;

FIG. 24c is a schematic diagram of twenty-first candidate resource distribution according to an embodiment of this application;

FIG. 24d is a schematic diagram of twenty-second candidate resource distribution according to an embodiment of this application;

FIG. 25 is a schematic diagram of twenty-third candidate resource distribution according to an embodiment of this application;

FIG. 26a is a schematic diagram of twenty-fourth candidate resource distribution according to an embodiment of this application;

FIG. 26b is a schematic diagram of twenty-fifth candidate resource distribution according to an embodiment of this application;

FIG. 27 is a schematic diagram of twenty-sixth candidate resource distribution according to an embodiment of this application;

FIG. 28a is a schematic diagram of twenty-seventh candidate resource distribution according to an embodiment of this application;

FIG. 28b is a schematic diagram of twenty-eighth candidate resource distribution according to an embodiment of this application;

FIG. 29 is a schematic structural diagram of an access network device according to an embodiment of this application;

FIG. 30 is a schematic structural diagram of another access network device according to an embodiment of this application;

FIG. 31 is a schematic structural diagram of a terminal device according to an embodiment of this application; and

FIG. 32 is a schematic structural diagram of another terminal device according to an embodiment of this application.

## DESCRIPTION OF EMBODIMENTS

For a wireless communications system (for example, an NR system) operating on an unlicensed frequency band, to implement synchronization between a terminal device and an access network device on the unlicensed frequency band, the access network device needs to send a synchronization signal to the terminal device (an SSB is a basic unit for transmission of a synchronization signal). In addition, before sending the synchronization signal on the unlicensed frequency band, the access network device needs to perform clear channel assessment (Clear Channel Assessment, CCA). How to ensure sending of a plurality of SSBs on the unlicensed frequency band resource is an urgent problem to be resolved.

Therefore, a synchronization signal block transmission method is urgently required, so that an access network device in a wireless communications system operating on an unlicensed frequency band transmits a synchronization signal block to a terminal device.

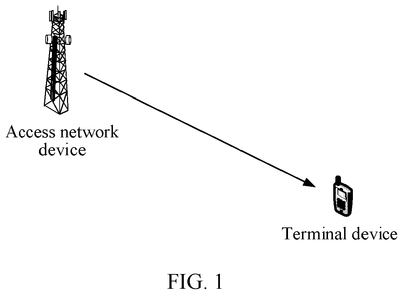

The following first describes an application scenario of this application. In a wireless communications system shown in FIG. 1, in a downlink transmission process, an access network device sends a synchronization signal block to a terminal device on a time-frequency resource on an unlicensed frequency band, and the terminal device parses the SSB to obtain time information, so that the terminal device is synchronized with the access network device.

The access network device in the embodiments of this application may be a network device (base transceiver station, BTS) in a global system for mobile communications (global system for mobile communications, GSM) or a code division multiple access (code division multiple access, CDMA), or may be a network device (NodeB) in a wideband code division multiple access (wide-band code division multiple access, WCDMA), or may be an evolved network device (evolved node B, eNB or e-NodeB) in a long term evolution (long term evolution, LTE) system or a 5G base station in a 5G network architecture (next generation system), or may be a home evolved NodeB (home evolved node B, HeNB), a relay node (relay node), a home NodeB (femto), a picocell base station (pico), or the like. A type of the access network device is not specifically limited in the embodiments of this application.

The terminal device in the embodiments of this application may be a device that provides a user with voice and/or data connectivity, and corresponds to a handheld device having a wireless connection function, or another processing device connected to a wireless modem. The terminal device may communicate with one or more core networks by using a radio access network (radio access network, RAN). The terminal device may be a mobile terminal, such as a mobile phone (or referred to as a "cellular" phone), or a computer corresponding to a mobile terminal. For example, the terminal device may be a portable, pocket-sized, handheld, computer built-in, or in-vehicle mobile apparatus, which exchanges voice and/or data with the radio access network. For example, the terminal device may be a device such as a personal communication service (personal communication service, PCS) phone, a cordless phone, a session initiation protocol (session initiation protocol, SIP) phone set, a wireless local loop (wireless local loop, WLL) station, or a personal digital assistant (personal digital assistant, PDA). The terminal device may also be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or user equipment (user equipment). This is not limited in the embodiments of this application.

The following provides explanations for basic concepts in this application. It should be noted that these explanations are intended to make this application easier to be understood, and should not be considered as a limitation on the protection scope claimed by this application. 1. Unlicensed frequency band

In a wireless communications network, devices need to use a frequency resource to transmit information. The frequency resource is also referred to a spectrum or a frequency band. The frequency band may include a licensed frequency band and a license-exempt frequency band. The license-exempt frequency band is also referred to as an unlicensed frequency band. The licensed frequency band is a frequency resource exclusive to some operators, and the unlicensed frequency band is a public frequency resource in the wireless communications network. With development of communications technologies, an amount of information transmitted in the wireless communications network increases daily, and using the unlicensed frequency band to transmit information can increase a data throughput in the wireless communications network and better satisfy a user requirement.

Resource sharing on the unlicensed frequency band means that, only limitations on indicators of transmit power, out-of-band leakage, and the like are set for use of a particular spectrum, to ensure that a plurality of devices sharing the frequency band meet a basic coexistence requirement, and radio technologies, operating enterprises, and service life are not limited. However, service quality on the frequency band is not ensured either. An operator may implement network capacity offloading by using an unlicensed frequency band resource, but needs to abide by regulations and requirements formulated by different regions and different spectrums for the unlicensed frequency band resource. These requirements are usually imposed to protect a public system such as radar and to ensure that a plurality of systems fairly coexist and have as little negative impact as possible on each other, and include a transmit power limit, an out-of-band leakage indicator, indoor and outdoor use restrictions. In addition, some regions further have some additional coexistence policies and the like.

2. Clear channel assessment

According to regulations in some regions and countries (for example, Europe and Japan), communication using an unlicensed frequency band needs to conform to LBT (listen before talk, listen before talk) coexistence specifications. LBT is a coexistence policy between systems. A communications device (for example, for an LTE (long term evolution, long term evolution) system or a licensed assisted access LTE (licensed assisted access LTE, LAA-LTE) system, a wireless communications device may include a base station and user equipment) needs to abide by a listen-before-transmit (namely, LBT) rule during communication on an unlicensed frequency band. A basic idea of LBT is as follows: Before sending a signal on a channel, each communications device needs to first detect whether the current channel is idle, that is, whether a nearby node is sending a signal on the channel (namely, the current channel) detected by the communications device. This detection process is the foregoing CCA. In a period of time, if it is detected that the channel is idle, the communications device may send a signal; or if it is detected that the channel is occupied, the communications device cannot send a signal currently.

In the CCA process, detecting whether a channel is idle may be implemented through signal detection, energy detection, or the like. For example, if received or detected energy is lower than a threshold, it may be considered that the channel is idle; or if a particular signal (which may be, for example, a preamble signal Preamble) is not detected, it may be considered that the channel is idle.

3. Synchronization signal block

In the embodiments of this application, a synchronization signal block includes a PSS and an SSS. By using a detected PSS and SSS, a terminal device may implement at least one of the following functions: identifying a cell transmitting the PSS and the SSS, which may be, for example, determining a cell identity (cell identity, Cell ID); implementing symbol-level time synchronization; and implementing frequency synchronization. Optionally, the synchronization signal block may further include a PBCH. The PBCH may include some basic information required by the terminal device to access a wireless communications system, for example, system broadcast information corresponding to a master information block (master information block, MIB), all or some information of a system frame number (system frame number, SFN), all or some information included in minimum system information (minimum system information, MSI), and a time index information (SSB time index) corresponding to an SSB in which the PBCH is located, where the time index information corresponding to the SSB may assist the terminal device in obtaining time information of an access network device.

For a wireless communications system deployed on an unlicensed frequency band in a standalone manner, for example, a standalone NR-U (NR over unlicensed carrier) system, to enable a terminal device in an idle state (idle state) to identify an NR cell and switch from the idle state to a connected state, an SSB may include a PSS, an SSS, and a PBCH. For a non-standalone NR-U system, a synchronization signal block may include only a PSS and an SSS. It should be noted that the foregoing non-standalone NR-U system may be an NR system that uses both a licensed frequency band and an unlicensed frequency band through carrier aggregation (carrier aggregation, CA) or dual connectivity (dual connectivity, DC).

It should be noted that even for a same system such as the standalone NR-U system, there may be two forms of synchronization signal blocks at the same time. For example, one is a synchronization signal block used for identification by a terminal device in an idle state, and the other is a synchronization signal block used for identification by a terminal device in a connected state. The former may include a PSS, an SSS, and a PBCH. For the terminal device in the connected state, the access network device may notify, in another manner, content included in a PBCH. Therefore, the latter may include only a PSS and an SSS.

4. SS burst set and SS burst

In the embodiments of this application, a plurality of SSBs may form one SS burst set, or may form one SS burst.

A basic concept of the SS burst set is first described. A set including all synchronization signal blocks sent in one SS burst set periodicity may be considered as one SS burst set. Optionally, synchronization signal blocks included in one SS burst set may cover all beam directions of sending a synchronization signal. In other words, a plurality of synchronization signal blocks included in an SS burst set may cover all beam directions that can be supported by the system. Alternatively, optionally, some or all synchronization signal blocks included in one SS burst set may correspond to repeated sending in a same beam direction, so that coverage can be improved. In other words, the some or all synchronization signal blocks herein may correspond to a same beam direction. It should be noted that the beam direction herein may be omnidirectional, or may correspond to a particular direction.

The SS burst set may appear periodically (in the embodiments of this application, a period corresponding to the SS burst set is referred to as an SS burst set periodicity). Currently, 5G NR discussions have approved the following features of the SS burst set periodicity:

(1) For a terminal device that performs initial access, an SS burst set periodicity may be 20 ms.
(2) For a terminal device in a connected state or a terminal device that identifies an NR access network device, an SS burst set periodicity may be any value in the following set: {5 ms, 10 ms, 20 ms, 40 ms, 80 ms, 160 ms}.

It should be noted that in the embodiments of this application, the SS burst set periodicity may be understood as follows: A resource that is included in the SS burst set and that is used to transmit a synchronization signal block appears periodically. Synchronization signal blocks transmitted on the resources that appear periodically may be the same, for example, corresponding to a same beam direction; or may be different, for example, corresponding to different beam directions. This is not specifically limited in the embodiments of this application.

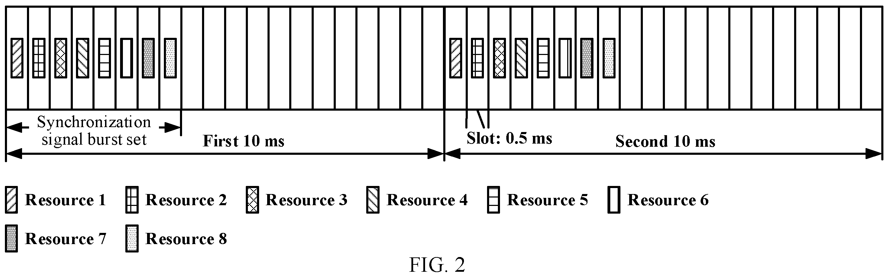

FIG. 2 is a schematic diagram of resource distribution in an SS burst set periodicity. In FIG. 2, it is assumed that, the SS burst set periodicity is 10 ms, including 20 slots (Slot), each slot is 0.5 ms, one SS burst set includes eight synchronization signal blocks, and each slot includes one resource used to transmit a synchronization signal block. Correspondingly, the 10 ms includes eight resources used to transmit the synchronization signal blocks. It may be learned based on FIG. 2 that, the eight resources appear periodically at regular intervals of 10 ms. A beam direction of a synchronization signal block that is correspondingly transmitted on a resource 1 in the first 10 ms may be the same as or different from a beam direction of a synchronization signal block that is correspondingly transmitted on a resource 1 in the second 10 ms. This is not specifically limited in this embodiment of this application. Descriptions of the other resources in the same period are the same as that of the resource 1, and details are not described herein again.

For brevity, in subsequent descriptions of the embodiments of this application, unless otherwise specified, a synchronization signal block to be transmitted in an SS burst set periodicity is represented by an SSB x, where x is any integer in 0 to M-1, and M is a quantity of all synchronization signal blocks included in an SS burst set. Optionally, in an SS burst set periodicity, synchronization signal blocks used for transmission may be represented by an SSB 0, an SSB 1, an SSB 2, ..., and an SSB (M-1) respectively in chronological order. For example, in FIG. 2, synchronization signal blocks that need to be transmitted on a resource 1 to a resource 8 may be represented by an SSB 0 to an SSB 7 respectively. In this embodiment of this application, a terminal device may identify, by using a detected SSB x, time information corresponding to the SSB x, and the time information may be represented by using an SSB time index corresponding to the SSB x. In this case, a correspondence between the SSB time index and system time information may be predefined (Predefined). For example, in FIG. 2, assuming that the SSB 0 is transmitted on the resource 1, when detecting the SSB 0, the terminal device may determine time information corresponding to the resource 1, for example, may determine that time information corresponding to the currently detected SSB 0 is the first slot included in the 10 ms. In addition, the terminal device may determine symbol information in the slot based on information about a symbol on which the SSB 0 is located.

As described above, the SS burst set may include transmission of a plurality of synchronization signal blocks. For example, the plurality of synchronization signal blocks may correspond to a plurality of beam directions; or the plurality of synchronization signal blocks may correspond to a same beam direction but are repeatedly transmitted. Therefore, coverage performance is improved through repeated transmission. Optionally, a quantity of synchronization signal blocks transmitted in the SS burst set may vary depending on different carrier frequency ranges. Specifically:

(1) For a carrier whose carrier frequency range is less than 3 GHz, a maximum of four synchronization signal blocks can be transmitted in one SS burst set.
(2) For a carrier whose carrier frequency range is between 3 GHz and 6 GHz, a maximum of eight synchronization signal blocks can be transmitted in one SS burst set.
(3) For a carrier whose carrier frequency range is greater than 6 GHz, a maximum of 64 synchronization signal blocks can be transmitted in one SS burst set.

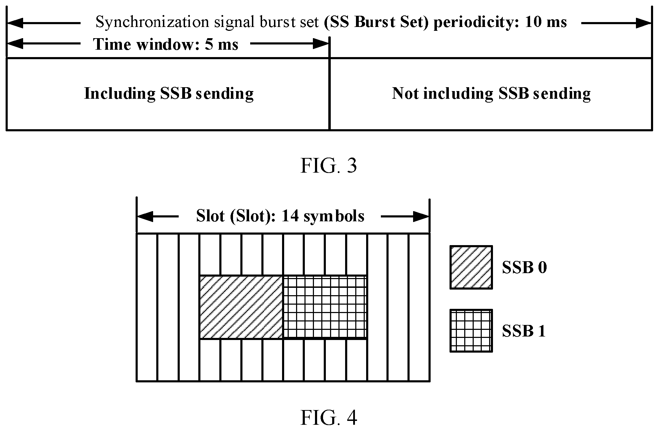

In an SS burst set periodicity, to reduce power consumption of detecting a synchronization signal block by the terminal device, the following may be set: Regardless of the SSB burst set periodicity, a plurality of synchronization signal blocks included in an SS burst set are all sent in one time window (namely, a preset time window described in this embodiment of this application). For example, a length of the time window is 5 ms, and optionally, the time window includes 5 ms time resources that are consecutive in time. For example, a time window that is in an SS burst set and that is used to transmit a synchronization signal block may be shown in FIG. 3. In FIG. 3, an SS burst set periodicity is 10 ms, and a plurality of synchronization signal blocks are all sent in the first 5 ms time window in the SS burst set periodicity.

Advantages of sending all the plurality of synchronization signal blocks in one time window (namely, the preset time window described in this embodiment of this application) are as follows: For a terminal device in inter-frequency measurement, service interruption time between an access network device and the terminal device can be reduced, to ensure continuity of service transmission; in addition, a power saving effect can be achieved, because the terminal device does not need to enable an inter-frequency radio frequency component for a long time, but blindly detects a synchronization signal block and performs inter-frequency measurement in 5 ms. In this embodiment of this application, for ease of description, a time window including transmission of the plurality of synchronization signal blocks in the frequency range is referred to as an SSB time window (which is equivalent to the preset time window described in this embodiment of this application).

It should be noted that SSB transmission includes nominal SSB transmission (Nominal SSB transmission) and actual SSB transmission. The nominal SSB transmission merely indicates possible synchronization signal block transmission, and the actual SSB transmission is actual synchronization signal block transmission performed by the access network device. In the SSB time window, a maximum quantity of SSBs that need to be transmitted by the access network device may be considered as nominally transmitted SSBs, for example, the above-mentioned maximum quantity of SSBs that can be transmitted in one SS burst set based on different carrier frequency ranges. For example, when the access network device does not know distribution of terminal devices within a coverage area served by the access network device, the access network device may use a nominal SSB transmission manner. When the access network device roughly learns of distribution of terminal devices within a coverage area served by the access network device, the access network device may use an actual SSB transmission manner, for example, transmit SSBs only in some directions within the coverage area of the access network device. Apparently, in the SSB time window, a quantity of actually transmitted SSBs is not greater than a quantity of nominally transmitted SSBs.

In addition, in this embodiment of this application, one SS burst set may alternatively include a plurality of SS bursts. An advantage of this practice is that after receiving a plurality of synchronization signal blocks included in the SS burst, the terminal device may consider performing combined detection on a plurality of PBCHs included in the plurality of synchronization signal blocks.

Based on the foregoing descriptions of the PBCH, the PBCH carries some control information, and the control information may be used by the terminal device to access a cell. To quickly obtain control information in a PBCH, the terminal device may independently decode each PBCH (to be specific, upon detecting a PBCH, the terminal device correctly demodulates the PBCH to obtain all control information included in the PBCH), or may perform combined detection on a plurality of detected PBCHs according to a specific criterion. For example, the terminal device determines a PSS and an SSS through sequence detection, and then may determine a time location of a PBCH included in an SSB including the PSS and the SSS (it may be considered in this process that the terminal device detects the PBCH). In this case, the terminal device may fail to restore control information included in the detected PBCH by independently decoding the detected PBCH. Therefore, the terminal device may perform combined detection on two detected PBCHs, to restore control information included in each PBCH.

It should be noted that a higher similarity between control information included in a plurality of PBCHs indicates lower complexity of combined detection performed by the terminal device on the plurality of PBCHs. To be specific, in a combined detection process, if control information included in PBCHs detected by the terminal device on different resources is different, complexity of combined detection by the terminal device increases; or if control information included in different PBCHs detected by the terminal device on different resources is the same (or if control information that is included is not completely the same, but different control information occupies a relatively small quantity of bits), complexity of combined detection by the terminal device decreases. Therefore, optionally, the SS burst is defined as follows: Combined detection may be implemented on PBCHs included in the SS burst.

In addition, the SS burst may alternatively be defined as follows: In one SS burst set periodicity, different synchronization signal blocks may be consecutive or inconsecutive in time. Therefore, in the SS burst set periodicity, a plurality of synchronization signal blocks that are consecutively distributed in time may be referred to as one SS burst. It should be noted that, "consecutive in time" may mean that symbols occupied by different synchronization signal blocks are consecutive, or slots in which different synchronization signal blocks are located are consecutive and/or the same.

FIG. 4 is a schematic diagram of distribution of an SS burst including synchronization signal blocks that occupy consecutive symbols. In FIG. 4, it is assumed that, two synchronization signal blocks are in one slot, the slot includes 14 symbols, for example, orthogonal frequency division multiplexing (Orthogonal Frequency Division Multiplexing, OFDM) symbols, and each synchronization signal block occupies four symbols.

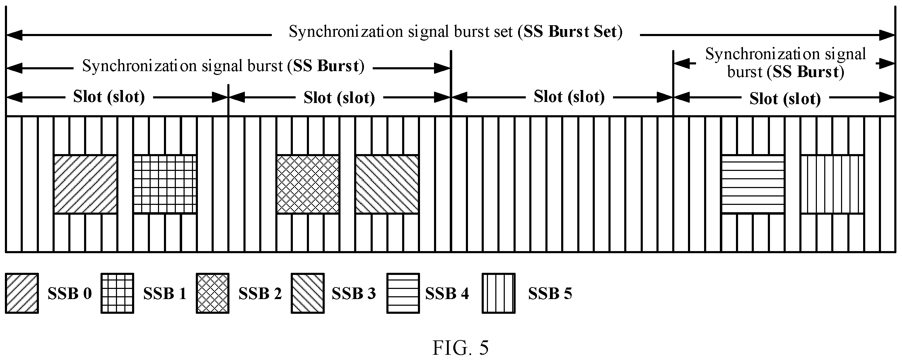

FIG. 5 is a schematic diagram of distribution of an SS burst including synchronization signal blocks that are located in consecutive slots. In FIG. 5, it is assumed that, one SS burst set includes six synchronization signal blocks, one slot includes 14 symbols, each SSB occupies four symbols, the first four synchronization signal blocks form one SS burst, and the last two synchronization signal blocks form one SS burst.

It should be noted that in this embodiment of this application, different SS bursts may include a same quantity of synchronization signal blocks or different quantities of synchronization signal blocks. This is not specifically limited herein.

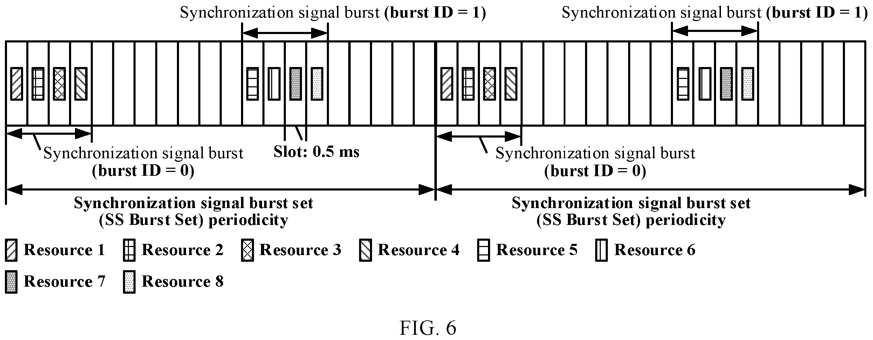

Optionally, it may be understood that a period of an SS burst may be the same as an SS burst set periodicity. For example, a resource that is included in an SS burst and that is used to transmit a synchronization signal block repeats at regular intervals of an SS burst set periodicity. FIG. 6 is a schematic diagram of distribution of an SS burst. It is assumed that, one SS burst set includes two SS bursts, corresponding to burst IDs 0 and 1 respectively, and each SS burst includes four SSBs. Based on FIG. 6, the SS burst also repeats at regular intervals of an SS burst set periodicity. To be specific, a time interval between two SS bursts with the burst ID 0 is the SS burst set periodicity, and a time interval between two SS bursts with the burst ID 1 is also the SS burst set periodicity. It should be noted that the time interval between the two SS bursts herein may be understood as a time interval between slots in which respective first SSBs included in the two SS bursts are located. 5. Candidate resource

In the embodiments of this application, to increase a transmission probability of a synchronization signal block in a cell using an unlicensed frequency band, there may be more than one resource used to transmit a same synchronization signal block (optionally, the more than one corresponding resource refers to more than one time resource used to transmit the synchronization signal block). During synchronization signal block transmission, an access network device may transmit a synchronization signal block on any resource, provided that a channel on an unlicensed frequency band corresponding to the resource is in an idle state. In the embodiments of this application, one or more resources used to transmit a same synchronization signal block are referred to as candidate resources. Herein, "candidate" means that a plurality of candidate resources used to transmit a same synchronization signal block may be all used to transmit the synchronization signal block, and a specific candidate resource used for transmission needs to be determined based on a CCA detection result.

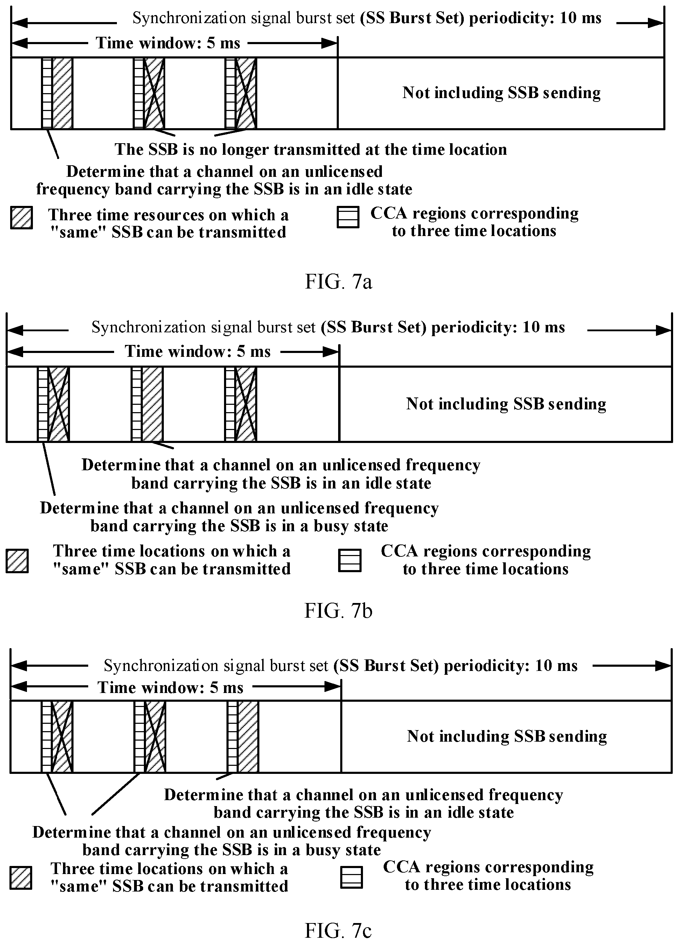

FIG. 7a to FIG. 7c are schematic diagrams illustrating that a same synchronization signal block corresponds to a plurality of candidate resources. An SS burst set periodicity is 10 ms, and a time window used to transmit a synchronization signal block is 5 ms. There are three time resources that can be used to transmit a same SSB in the 5 ms time window, and the three time resources are a time resource 1, a time resource 2, and a time resource 3 respectively in chronological order.

In addition, in FIG. 7a to FIG. 7c, a CCA region corresponding to each of the three time resources is used by the access network device for sensing, to determine whether a channel on an unlicensed frequency band corresponding to the time resource is in an idle state. Specifically, whether the sensed channel is in an idle state may be implemented by using the foregoing energy detection method and/or signal detection method. In the CCA region, the access network device may perform a sensing manner without random backoff, for example, one-shot LBT; or the access network device may perform a sensing manner with random backoff, for example, a sensing manner of type 2 (LBT Type 2) used in an LAA-LTE system. A sensing manner of the access network device is not specifically limited in the embodiments of this application. When the sensed channel is in an idle state, the access network device may send the synchronization signal block over the channel. In FIG. 7a, if a channel on an unlicensed frequency band corresponding to the time resource 1 is in an idle state, the access network device transmits the synchronization signal block on the time resource 1. In FIG. 7b, if a channel on an unlicensed frequency band corresponding to the time resource 1 is in a busy state, and a channel on an unlicensed frequency band corresponding to the time resource 2 is in an idle state, the access network device transmits the synchronization signal block on the time resource 2. In FIG. 7c, if channels on unlicensed frequency bands corresponding to the time resource 1 and the time resource 2 are both in a busy state, and a channel on an unlicensed frequency band corresponding to the time resource 3 is in an idle state, the access network device transmits the synchronization signal block on the time resource 3. It should be noted that, in the embodiments of this application, there may be a plurality of resources used to transmit a synchronization signal block; however, to ensure fair use of unlicensed frequency band resources, the following may be set: In a preset time window of an SS burst set periodicity, the synchronization signal block is sent only once or is not sent (for example, if channels on unlicensed frequency bands corresponding to the candidate resources used to transmit the synchronization signal block are all in a busy state, the synchronization signal block is not sent in the preset time window).

In addition, it should be noted that the CCA region in FIG. 7a to FIG. 7c is merely an example, and only indicates that before sending the synchronization signal block, the access network device needs to sense to determine availability of a channel. More generally, the access network device can send an SSB on a candidate resource provided that the access network device ensures that a channel on an unlicensed frequency band corresponding to the candidate resource is in an idle state.

Optionally, in the embodiments of this application, the plurality of candidate resources for transmitting a same synchronization signal block may be divided into two types: a preset resource and a resource obtained after a translation of the preset resource. For ease of description, the latter is referred to as a flexible resource in the embodiments of this application.

The preset resource may have the following two meanings:

First, the preset resource may be considered as a time location of a resource that is used by the access network device to transmit a synchronization signal block in a preset time window in a cell using an unlicensed frequency band, and the time location of the resource is the same as a time location of a resource that is used by the access network device to transmit a synchronization signal block in a preset time window in a cell using a licensed frequency band. It should be noted that, for a standalone NR-U system, there is no licensed frequency band available for the access network device. In this case, "a resource that is used by the access network device to transmit a synchronization signal block in a time window in a cell using a licensed frequency band" in the foregoing description may be understood as "if a resource that is used by the access network device to transmit a synchronization signal block in a time window in a cell using a licensed frequency band". Assuming that a resource used by the access network device to transmit a synchronization signal block in a cell using a licensed frequency band is the resource 1, and a time location of the resource 1 is a first time location in absolute time, when the access network device transmits the synchronization signal block in a cell using an unlicensed frequency band, a time location of a preset resource corresponding to transmission of the synchronization signal block is the same as the first time location.

Second, the preset resource may also be considered as a resource that is preferentially used by the access network device when transmitting a synchronization signal block in a preset time window in a cell using an unlicensed frequency band, without considering a CCA result. For example, in FIG. 7a to FIG. 7c, without considering CCA results corresponding to three time resources, the access network device preferentially transmits the synchronization signal block on the time resource 1, and the time resource 1 may be considered as a preset resource. In other words, regardless of whether a CCA result corresponding to the time resource 1 indicates that a channel is in an idle state or in a busy state, the access network device sends the synchronization signal block on the time resource 1.

The flexible resource may be considered as a resource in the preset time window that is obtained after translation of the preset resource in time. It should be noted that the translation in time includes backward translation and forward translation. For example, in FIG. 7a to FIG. 7c, if the time resource 1 is a preset resource, both the time resource 2 and the time resource 3 may be considered as flexible resources obtained after the preset resource is translated ahead in time. A same synchronization signal block is transmitted on the time resource 1, the time resource 2, and the time resource 3.

6. Same synchronization signal block

As described above, in the embodiments of this application, to increase a transmission probability of a synchronization signal block in a cell using an unlicensed frequency band, there may be more than one candidate resource used to transmit a same synchronization signal block.

In the embodiments of this application, the "same synchronization signal block" may be understood as synchronization signal blocks corresponding to a same beam direction, that is, synchronization signal blocks that are correspondingly transmitted on a plurality of candidate resources used to transmit the "same synchronization signal block" correspond to a same beam direction. Alternatively, the "same synchronization signal block" may be understood as follows: Except that relative time offset information of different candidate resources is different, synchronization signal blocks that are correspondingly transmitted on a plurality of candidate resources used to transmit the "same synchronization signal block" carry same control information.

In addition, the "same synchronization signal block" may alternatively be understood as synchronization signal blocks that carry a same SSB time index, that is, SSB time indexes included in synchronization signal blocks transmitted on a plurality of candidate resources used to transmit the "same synchronization signal block" are the same. For example, for a carrier whose carrier frequency range is less than 3 GHz, a maximum of four SSBs can be transmitted in one SS burst set, and may correspond to four different SSB time indexes, which are represented by, for example, an SSB time index 0, an SSB time index 1, an SSB time index 2, and an SSB time index 3. When transmission on an unlicensed frequency band is considered, to increase a transmission probability, resources that can be used to transmit an SSB may be added in an SSB time window, and the added resources may be considered as flexible resources as described above. For example, four flexible resources may be added, each flexible resource corresponds to one of the four SSB time indexes, and SSB time indexes corresponding to the four flexible resources are different from each other. In this case, SSBs transmitted on resources corresponding to a same SSB time index may be considered as a same synchronization signal block SSB. For another example, two flexible resources may be added, and each flexible resource corresponds to one SSB time index. For example, if the two flexible resources correspond to an SSB time index 0 and an SSB time index 1 respectively, SSBs transmitted on resources (two resources) corresponding to the SSB time index 0 may be considered as a same SSB. The same description is true for the SSB time index 1, and details are not described herein again. It should be noted that this part of description may also apply to another carrier frequency range, and details are not described herein again. Herein, a function of the SSB time index is as follows: A terminal device may determine, by using the SSB time index, time information of a system in which an access network device is located, and further optionally, may determine, by using the SSB time index, time information in an SSB time window, for example, time information in 5 ms.

For example, in an SS burst set, if a maximum quantity of SSBs sent on a preset resource is $Z$, where $Z > 1$, it may be considered that there are $Z$ SSB time indexes in total. Optionally, if indicated by using an explicit indication method, the $Z$ SSB time indexes may be indicated by using $\lceil \log_2 Z \rceil$ bits, where $\lceil \log_2 Z \rceil$ represents rounding-up of a result of $\log_2 Z$. Each SSB time index may be mapped to a location of a candidate resource. If the terminal device detects a synchronization signal block, the terminal device may determine, by using information about an SSB time index included in the synchronization signal block, some time information of the system in which the access network device is located. Optionally, in an implicit indication manner, the $Z$ SSB time indexes or some of the $Z$ SSB time indexes may be indicated by using different sequence forms of a reference signal. Further, optionally, with reference to other control information included in a PBCH, the terminal device may determine SFN time information, slot time information, symbol time information, and the like of the system in which the access network device is located.

It should be noted that an SSB time index and an SSB index may or may not be in a one-to-one correspondence. This is not specifically limited in the embodiments of this application. An SSB index may be used to identify different synchronization signal blocks, for example, to identify synchronization signal blocks with different beam directions, while the SSB time index is used to identify locations of different candidate resources for sending synchronization signal blocks. When the SSB time index and the SSB index are in a one-to-one correspondence, it may indicate that a particular synchronization signal block is sent on a candidate resource indicated by a particular SSB time index. For example, a synchronization signal block in a particular beam direction (for example, represented by a beam direction 1) is always sent on a candidate resource corresponding to an SSB time index 0, and a synchronization signal block in another particular beam direction (for example, represented by a beam direction 2) is always sent on a candidate resource corresponding to an SSB time index 1.

When the SSB time index and the SSB index are not in a one-to-one correspondence, it may indicate that SSB transmitted on candidate resources corresponding to a same SSB time index may be different. For example, in an SSB burst set periodicity, a synchronization signal block in a beam direction 1 is sent on a candidate resource corresponding to an SSB time index 0; in a next SSB burst set periodicity, a synchronization signal block in a beam direction 2 may be sent on the candidate resource corresponding to the SSB time index 0.

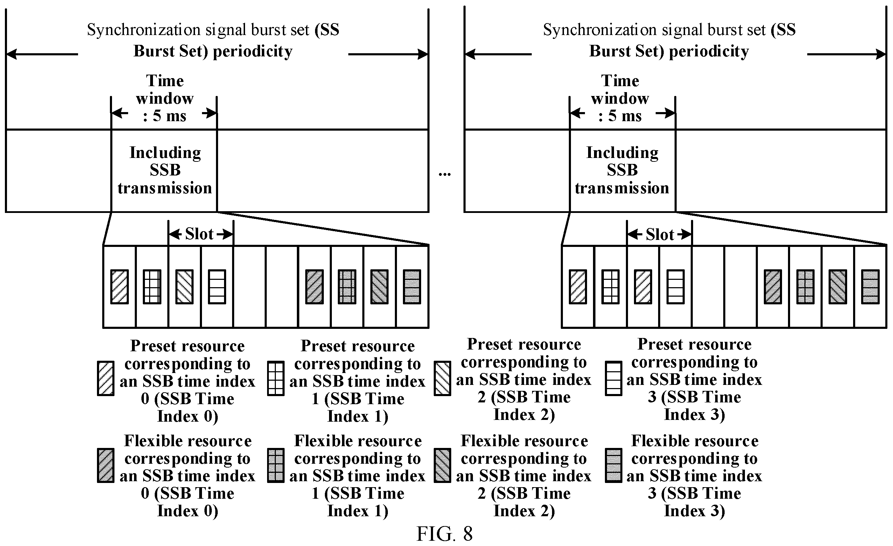

FIG. 8 is a schematic diagram of distribution of a synchronization signal block, and is intended to describe a concept of a "same synchronization signal block" in an SSB burst set periodicity. It is assumed that in one SSB burst set periodicity, four synchronization signal blocks need to be sent, and a length of an SSB time window is 5 ms. There may be W SS burst set periodicities between two SSB burst set periodicities in FIG. 8, where $W \geq 0$. In FIG. 8, preset resources with a same SSB time index may be used to transmit a "same synchronization signal block". For example, preset resources corresponding to an SSB time index 0 may be used to transmit a "same synchronization signal block". In addition, to increase a transmission opportunity of a synchronization signal block on an unlicensed frequency band, in addition to the preset resources, flexible resources also exist, and each flexible resource also corresponds to one SSB time index. In the embodiments of this application, a preset resource and a flexible resource that have a same SSB time index may be considered as resources used to transmit a "same synchronization signal block". For example, the preset resource and the flexible resource that correspond to the SSB time index 0 may be considered as resources used to transmit the "same synchronization signal block". In addition, in the embodiments of this application, even if SSBs transmitted on a preset resource corresponding to an SSB time index 0 and a preset resource corresponding to an SSB time index 1 have a same beam direction, it may be understood that the SSBs transmitted on the preset resource corresponding to the SSB time index 0 and the preset resource corresponding to the SSB time index 1 are different. In other words, whether the SSBs may be considered as the "same synchronization signal block" in this case depends on whether SSB time indexes thereof are the same.

To make objectives, technical solutions, and advantages of this application clearer, the following further describes this application in detail with reference to the accompanying drawings.

This application provides a synchronization signal block transmission method, an access network device, and a terminal device, so that an access network device in a wireless communications system operating on an unlicensed frequency band transmits a synchronization signal block to a terminal device. The method and the apparatus are based on a same inventive concept. Because problem-resolving principles of the method and the apparatus are similar, apparatus implementation and method implementation may be mutually referenced. Repeated parts are not described.

It should be noted that "a plurality of" means "two or more" in this application. In addition, it should be understood that in the description of this application, terms such as "first" and "second" are merely used for distinction description, and shall not be understood as an indication or implication of relative importance or an indication or implication of an order.

In the following, a synchronization signal block transmission solution provided in this application is described in detail with reference to the accompanying drawings.

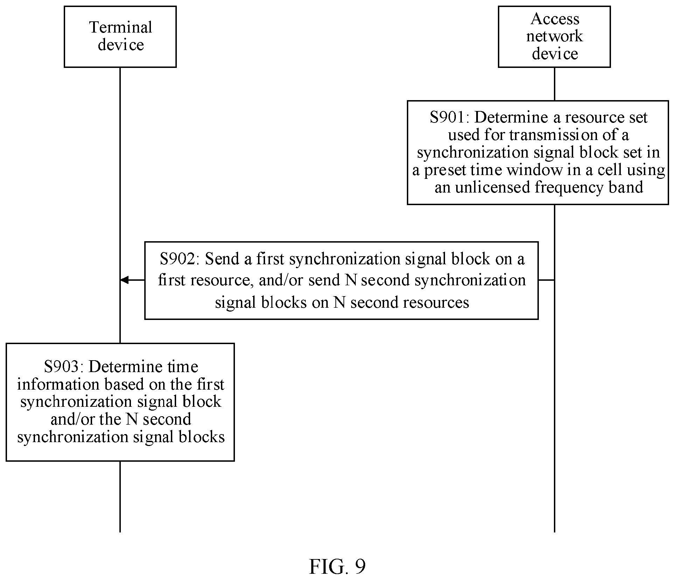

FIG. 9 is a schematic flowchart of a synchronization signal block transmission method according to an embodiment of this application. The method includes the following steps.

S901: An access network device determines a resource set used for transmission of a synchronization signal block set in a preset time window in a cell using an unlicensed frequency band.

The synchronization signal block set includes a first synchronization signal block and L second synchronization signal blocks, and each synchronization signal block included in the synchronization signal block set includes a PSS and an SSS, where $L \geq 1$; the resource set includes a plurality of first candidate resources used to transmit the first synchronization signal block and at least L second candidate resources used to transmit the L second synchronization signal blocks. As described above, the synchronization signal block may include different content depending on different application scenarios of the unlicensed frequency band. Optionally, each synchronization signal block included in the synchronization signal block set may further include a PBCH.

It should be noted that the foregoing synchronization signal block set may be considered as an SS burst set, or may be considered as an SS burst. Alternatively, the synchronization signal block set may be considered as another expression equivalent to the SS burst set or the SS burst. This is not specifically limited herein.

The resource set used for transmission of the synchronization signal block set may be understood as a set including resources used to transmit all synchronization signal blocks (the first synchronization signal block and the L second synchronization signal blocks) included in the synchronization signal block set. For example, if the synchronization signal block set includes K synchronization signal blocks in total, a set including resources used to transmit the K synchronization signal blocks is the resource set used for transmission of the synchronization signal block set. A resource used to transmit a synchronization signal block includes a time resource and a frequency resource, and the time resource may be determined by using a quantity of symbols used to transmit the synchronization signal block and locations of the symbols.

As described above, in this embodiment of this application, to increase a transmission probability of a synchronization signal block in the cell using the unlicensed frequency band, there may be more than one candidate resource used to transmit a same synchronization signal block in the resource set used for transmission of the synchronization signal block set. In S901, there are a plurality of first candidate resources used to transmit the first synchronization signal block, and there are at least L second candidate resources used to transmit the L second synchronization signal blocks. The quantity of second candidate resources used to transmit the L second synchronization signal blocks is limited because of limited candidate resources used for transmission of the synchronization signal block set in the preset time window. For a second synchronization signal block, in the preset time window, there may be only one candidate resource used to transmit the second synchronization signal block, or there may be a plurality of candidate resources used to transmit the second synchronization signal block. This is not specifically limited herein.

During transmission of the synchronization signal block set, the access network device may transmit a synchronization signal block on any resource, provided that a channel on an unlicensed frequency band corresponding to the resource is in an idle state.

For the plurality of first candidate resources used to transmit the first synchronization signal block, it may be understood that a same synchronization signal block is transmitted on the plurality of first candidate resources. With reference to the foregoing description, the first synchronization signal block transmitted on the plurality of first candidate resources may be understood in the following manners: One understanding may be that beam directions corresponding to synchronization signal blocks transmitted on the plurality of first candidate resources are the same. Another understanding may be that SSB time indexes corresponding to synchronization signal blocks transmitted on the plurality of first candidate resources are the same. For descriptions of the SSB time index, refer to the foregoing descriptions. The same description is true for a plurality of candidate resources for transmitting another synchronization signal block, and details are not described herein again. In addition, there may be other explanations of the plurality of first candidate resources used to transmit the first synchronization signal block. This is not specifically limited herein.

It should be noted that in this embodiment of this application, a carrier is conceptually equivalent to a cell. For example, that a terminal device accesses a carrier is equivalent to that a terminal device accesses a cell. This embodiment of this application is described by using a concept of a cell.

It should be noted that, in this embodiment of this application, the preset time window may appear at regular intervals of an SSB burst set periodicity, and a set including all SSBs that may be sent by the access network device in one SSB burst set periodicity is one SSB burst set. Herein, all the SSBs that may be sent may include SSBs nominally transmitted by the access network device. For nominal SSB transmissions and actual SSB transmissions, refer to the foregoing descriptions. As described above, regardless of a specific length of the SSB burst set periodicity, SSB transmission is concentrated in the preset time window. In this embodiment of this application, the preset time window may be 5 ms.

It should be noted that, in this embodiment of this application, preferably, the synchronization signal block set is a set including nominally transmitted SSBs.

It should be noted that, the resource set used for transmission of the synchronization signal block set in S901 includes the plurality of first candidate resources used to transmit the first synchronization signal block, and this may also be understood as that the resource set includes at least two first candidate resources used to transmit the first synchronization signal block. In this embodiment of this application, the first candidate resource is used to transmit the first synchronization signal block, and the second candidate resource is used to transmit the second synchronization signal block.

S902: The access network device sends the first synchronization signal block to a terminal device on a first resource in the plurality of first candidate resources based on a CCA result, where a channel on an unlicensed frequency band corresponding to the first resource is in an idle state; and/or the access network device respectively sends N second synchronization signal blocks in the L second synchronization signal blocks to the terminal device on N second resources in the at least L second candidate resources based on the CCA result.

The N second resources are in a one-to-one correspondence with the N second synchronization signal blocks, where $1 \leq N \leq L$, and a channel on an unlicensed frequency band corresponding to each of the N second resources is in an idle state.

When the access network device sends the synchronization signal block set in the preset time window, it needs to be ensured that a channel on an unlicensed frequency band corresponding to a resource used for sending the synchronization signal block set is in an idle state. In addition, in this embodiment of this application, to ensure fair use of unlicensed frequency band resources, preferably, the following limitation may be imposed: Even if there may be a plurality of first candidate resources used to transmit the first synchronization signal block, the access network device transmits the first synchronization signal block at most once in the preset time window. The same description is true for transmission of the second synchronization signal block, and details are not described again. Therefore, when the access network device determines which candidate resource in the plurality of first candidate resources is used to transmit the first synchronization signal block, it needs to be ensured that a channel on an unlicensed frequency band corresponding to the candidate resource is in an idle state. For brevity, the candidate resource may be referred to as the first resource. That is, when the access network device sends the first synchronization signal block on the first resource, it needs to be ensured that the channel on the unlicensed frequency band corresponding to the first resource is in an idle state. Similarly, when the access network device respectively sends the N second synchronization signal blocks on the N second resources, it needs to be ensured that channels on unlicensed frequency bands corresponding to the N second resources are in an idle state.

It should be noted that, in this embodiment of this application, that the N second resources are in a one-to-one correspondence with the N second synchronization signal blocks may be understood as follows: The N second synchronization signal blocks are transmitted on the N second resources respectively, one second synchronization signal block is correspondingly transmitted on each second resource, and N second synchronization signal blocks transmitted on N second resources are different from each other.

It should be noted that, that N is less than L may be understood as follows: Because the access network device fails to obtain an unlicensed frequency band resource through contention, a quantity of second synchronization signal blocks sent in the preset time window is less than L. Alternatively, that N is less than L may be understood as follows: A quantity (that is, N) of second synchronization signal blocks that are actually sent by the access network device in the preset time window is less than a quantity (that is, L) of nominally transmitted second synchronization signal blocks.

In this embodiment of this application, that a channel on an unlicensed frequency band corresponding to the first resource is in an idle state may be understood as follows: Before transmitting the first synchronization signal block by using the first resource, the access network device first determines, through CCA, that the first resource can be used to transmit the first synchronization signal block. The access network device may determine, by using an energy detection and/or signal detection method, whether a channel is in an idle state, or may determine, in another manner, whether a channel is in an idle state. This is not specifically limited. As described above, the access network device may perform a sensing manner without random backoff, or may perform a sensing manner with random backoff. FIG. 7a to FIG. 7c is still used as an example. If resources corresponding to three time locations are considered as candidate resources that may be used to transmit the first synchronization signal block in the preset time window, in FIG. 7a/FIG. 7b/FIG. 7c, the plurality of first candidate resources for transmitting the first synchronization signal block may be defined as a time resource 1, a time resource 2, and a time resource 3 respectively in chronological order.

More generally, it is assumed that in the preset time window, the plurality of first candidate resources used to transmit the first synchronization signal block are represented by a candidate resource 1, a candidate resource 2, ..., and a candidate resource J respectively in chronological order, where J > 1. In this case, when sending the first synchronization signal block in the preset time window, the access network device first determines whether a channel on an unlicensed frequency band corresponding to the candidate resource 1 is in an idle state. If the channel is in an idle state, the access network device uses the candidate resource 1 to transmit the first synchronization signal block. If the channel on the unlicensed frequency band corresponding to the candidate resource 1 is in a busy state, the access network device continues to determine whether a channel on an unlicensed frequency band corresponding to the candidate resource 2 is in an idle state. If the channel is in an idle state, the access network device uses the candidate resource 2 to transmit the first synchronization signal block. If the channel on the unlicensed frequency band corresponding to the candidate resource 2 is in a busy state, the access network device continues to sequentially determine whether remaining candidate resources that may be used to transmit the first synchronization signal block in the preset time window can be used to transmit the first synchronization signal block.

As described above, more than one candidate resource may be used to transmit the first synchronization signal block in the preset time window. However, based on a CCA channel state idle result, the access network device transmits the first synchronization signal block at most once in the preset time window, so that the access network device can better coexist with another network device operating on the unlicensed frequency band. Therefore, although the resource set used for the synchronization signal block set has been determined in S901, the access network device in S902 does not necessarily send all the synchronization signal blocks included in the synchronization signal block set because of the CCA detection result.

S903: The terminal device determines time information based on the first synchronization signal block and/or the N second synchronization signal blocks.

The time information may be used by the terminal device to synchronize with the access network device. For example, by using a PSS and an SSS in the detected first synchronization signal block and/or the detected N second synchronization signal blocks, the terminal device may implement at least one of the following functions: identifying a cell in which the PSS and the SSS are transmitted, for example, a cell ID may be determined; implementing symbol-level time synchronization; and implementing frequency synchronization. Further, the terminal device may parse out, by using a PBCH in the detected first synchronization signal block and/or the detected N second synchronization signal blocks, some basic information required for the terminal device to access a wireless communications system, for example, all or some information of an MIB, an SFN, and an MSI, and time index information (SSB time index) corresponding to the SSB. Optionally, before performing S903, the terminal device may further determine the resource set used for transmission of the synchronization signal block set and/or a location of the preset time window. Determining the location of the preset time window may include determining a period of the preset time window (which may be, for example, represented by an SS burst set periodicity) and a location of the preset time window in the period. Certainly, the location of the preset time window may alternatively be determined in another manner. This is not specifically limited in this embodiment of this application.

The resource set and/or the location of the preset time window that are/is determined by the terminal device may be preconfigured, for example, preconfigured in a standard protocol specification, or notified by using higher layer signaling. The higher layer signaling includes but is not limited to radio resource control (Radio Resource Control, RRC) signaling. The signaling may be terminal device-specific signaling, or may be broadcast signaling.

In the method shown in FIG. 9, after determining the resource set used for transmission of the synchronization signal block set in the preset time window in the cell using the unlicensed frequency band, the access network device sends the first synchronization signal block on the first resource in the resource set and/or sends the N second synchronization signal blocks on the N second resources in the resource set, where $N \geq 1$. Therefore, by using the method shown in FIG. 9, the first synchronization signal block and/or the N second synchronization signal blocks can be sent, and after receiving the first synchronization signal block and/or the N second synchronization signal blocks, the terminal device can parse out time information, so that synchronization between the terminal device and the access network device is implemented. In addition, in the preset time window, there is more than one first candidate resource used to transmit the first synchronization signal block, and there may also be more than one second candidate resource used to transmit the second synchronization signal block. Therefore, in the preset time window, a transmission probability of the synchronization signal block in the cell using the unlicensed frequency band is increased, and synchronization between the terminal device and the access network device on the unlicensed frequency band is further ensured.

In the method shown in FIG. 9, optionally, a time location of any one of the plurality of first candidate resources may not overlap a time location of any one of the at least L second candidate resources. In other words, time locations of candidate resources for transmitting different synchronization signal blocks in the preset time window do not overlap.

A time location of a candidate resource may be understood as a time location of a candidate resource used to transmit a synchronization signal block. For example, assuming that the first synchronization signal block includes a PSS and an SSS, and the PSS and the SSS each occupy one OFDM symbol during transmission, two OFDM symbols are required for transmission of the first synchronization signal block, and a time location of a first candidate resource used to transmit the first synchronization signal block may be indicated by using time locations of the two OFDM symbols. Assuming that the first synchronization signal block includes a PSS, an SSS, and a PBCH occupying two OFDM symbols, four OFDM symbols are required for transmission of the first synchronization signal block, and a time location of a first candidate resource used to transmit the first synchronization signal block may be indicated by using time locations of the four OFDM symbols. In other words, in this embodiment of this application, a time location of a candidate resource may be indicated by using a time location of an OFDM symbol that includes the candidate resource.

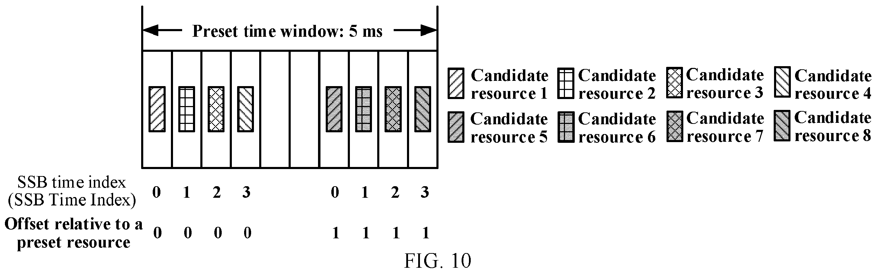

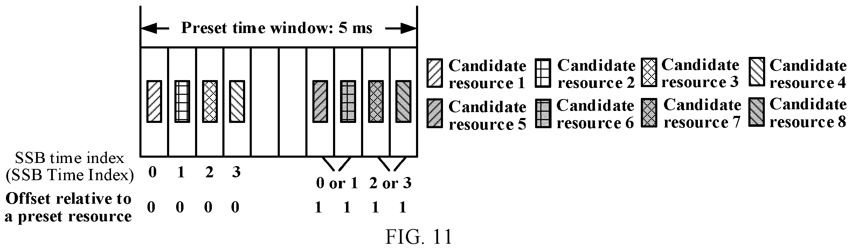

In the following, FIG. 10 and FIG. 11 are used, respectively, as examples to describe an implementation in which a time location of any first candidate resource does not overlap a time location of any second candidate resource and an implementation in which a time location of any first candidate resource overlaps a time location of any second candidate resource.

In FIG. 10 and FIG. 11, it is assumed that, a resource set that may be used for transmission of a synchronization signal block set in a preset time window includes eight candidate resources, which are represented by a candidate resource 1 to a candidate resource 8; and there are four synchronization signal blocks that need to be transmitted, which are represented by an SSB 0, an SSB 1, an SSB 2, and an SSB 3. Further, the candidate resource 1, the candidate resource 2, the candidate resource 3, and the candidate resource 4 may be considered as the foregoing preset resources, and the candidate resource 5, the candidate resource 6, the candidate resource 7, and the candidate resource 8 may be considered as the foregoing flexible resources.

FIG. 10 shows an implementation in which time locations of candidate resources used to transmit different synchronization signal blocks do not overlap. In FIG. 10, it is assumed that, candidate resources used to transmit the SSB 0 are the candidate resource 1 and the candidate resource 5, candidate resources used to transmit the SSB 1 are the candidate resource 2 and the candidate resource 6, candidate resources used to transmit the SSB 2 are the candidate resource 3 and the candidate resource 7, and candidate resources used to transmit the SSB 3 are the candidate resource 4 and the candidate resource 8.

In FIG. 10, for a synchronization signal block transmitted on a preset resource, the terminal device may determine, by using an SSB time index of the synchronization signal block, a time location corresponding to a candidate resource for transmitting the synchronization signal block. To simplify design, SSB time indexes corresponding to a preset resource and a flexible resource that are used to transmit a same synchronization signal block may be the same, but offsets of the preset resource and the flexible resource that are used to transmit the same synchronization signal block relative to the preset resource are different, as shown in FIG. 10. The offset may be explicitly carried in the synchronization signal block or may be implicitly indicated. It should be noted that, in FIG. 10, that an offset of a flexible resource relative to a preset resource is indicated by "0" and "1" is merely an example, and the offset may alternatively be indicated by using a preconfigured time interval, or the like.

It can be learned from FIG. 10 that, in the preset time window of 5 ms, synchronization signal blocks transmitted on different candidate resources may be identified by using different SSB time indexes and/or different offset values. An SSB time index may be explicitly carried in a synchronization signal block (for example, a PBCH in the synchronization signal block includes SSB time index information), or may be implicitly carried in a synchronization signal block, for example, indicated by using different sequence forms of a demodulation reference signal (demodulation reference signal, DMRS) used to demodulate the synchronization signal block. An offset value may be implicitly carried in a synchronization signal block (for example, represented by using different sequence types), or may be explicitly carried in a synchronization signal block (for example, carried in a PBCH).

As an advantage, non-overlapping time locations of candidate resources for transmitting different synchronization signal blocks can reduce complexity of combined detection on the synchronization signal blocks by the terminal device. For example, when the terminal device detects the 1st synchronization signal block, if the terminal device fails to correctly demodulate the 1st synchronization signal block to obtain control information carried in the 1st synchronization signal block, the terminal device performs combined detection on the 1st synchronization signal block and the 2nd synchronization signal block assuming that the terminal device also detects the 2nd synchronization signal block in this case, so that after the combined detection, the terminal device can obtain, through demodulation, respective control information carried in the 1st synchronization signal block and the 2nd synchronization signal block.

For example, in FIG. 10, during combined detection, the terminal device may consider performing combined detection on synchronization signal blocks transmitted on the candidate resource 1 and the candidate resource 2, or may consider performing combined detection on synchronization signal blocks on the candidate resource 2 and the candidate resource 3, or may consider performing combined detection on synchronization signal blocks on the candidate resource 4 and the candidate resource 5, or the like. Assuming that an SSB time index corresponding to a candidate resource and an offset of the candidate resource relative to a preset resource are used to indicate an SSB that is correspondingly transmitted at the location, during combined detection, the terminal device needs to consider the following several cases: <(0, 0), (1, 0)>, <(1, 0), (2, 0)>, <(2, 0), (3, 0)>, and <(3, 0), (0, 1)>. <P, Q> indicates that combined detection is performed on an SSB corresponding to P and an SSB corresponding to Q, and the SSBs corresponding to P and Q are represented by (x, y), where x in (x, y) represents an SSB time index, and y in (x, y) represents an offset of a candidate resource relative to a preset resource.

FIG. 11 shows an implementation in which time locations of candidate resources used to transmit different synchronization signal blocks overlap. In FIG. 11, preset resources used to transmit an SSB 0, an SSB 1, an SSB 2, and an SSB 3 are a candidate resource 1, a candidate resource 2, a candidate resource 3, and a candidate resource 4 respectively. A candidate resource 5 and a candidate resource 6 each may be used to transmit the SSB 0 or the SSB 1. A candidate resource 7 and a candidate resource 8 each may be used to transmit the SSB 2 or the SSB 3. When the terminal device may determine time information in the preset time window by using a detected synchronization signal block, time information included in synchronization signal blocks transmitted on different candidate resources may be identified by using SSB time indexes and offsets relative to the preset resources in FIG. 11. For the SSB time index and the offset relative to the preset resource, refer to related explanations in FIG. 10.

Apparently, complexity of combined PBCH detection by the terminal device in the manner of FIG. 11 is higher than that in FIG. 10. For example, when the terminal device detects the 1st synchronization signal block, if the terminal device fails to correctly demodulate the 1st synchronization signal block to obtain control information carried in the 1st synchronization signal block, the terminal device performs combined detection on the 1st synchronization signal block and the 2nd synchronization signal block (assuming that the terminal device also detects the 2nd synchronization signal block in this case). In the example shown in FIG. 11, during combined detection, the terminal device needs to consider the following several cases: <(0, 0), (1, 0)>, <(1, 0), (2, 0)>, <(2, 0), (3, 0)>, <(3, 0), (0, 1)>, <(3, 1), (0, 1)>, <(0, 1), (2, 1)>, <(0, 1), (3, 1)>, and <(1, 1), (3, 1)>. Meanings of the parameters are the same as those in the foregoing description, and are not specifically described again. Apparently, in comparison with FIG. 10, if the implementation shown in FIG. 11 is used, complexity of combined PBCH detection by the terminal device is increased.

As an advantage of overlapping time locations of candidate resources for transmitting different synchronization signal blocks, a transmission opportunity of a synchronization signal block can be increased by using such an implementation.

In this embodiment of this application, a possible implementation is as follows: For a same synchronization signal block, a flexible resource used to transmit the synchronization signal block may be obtained after a preset resource used to transmit the synchronization signal block is moved in a unit of an SS burst set periodicity in time. This manner may also be understood as follows: There are K x L second candidate resources and K first candidate resources between any two of the plurality of first candidate resources, where K ≥ 1. It should be noted that the same synchronization signal block herein may alternatively include the second synchronization signal block. To be specific, for a same second synchronization signal block, a flexible resource used to transmit the second synchronization signal block may be obtained after a preset resource used to transmit the second synchronization signal block is moved in a unit of an SS burst set periodicity in time.

"Between any two first candidate resources" may be understood as "between a start location of a time unit in which one first candidate resource is located and a start location of a time unit in which the other first candidate resource is located". In this embodiment of this application, the time unit may be understood as a slot or a half-slot, or may be defined in another manner. This is not specifically limited herein.

In addition, "L" in the K x L second candidate resources may represent a quantity of second SSBs in an SS burst set. For example, in an NR system, for a carrier whose carrier frequency range is less than 3 GHz, a maximum of four synchronization signal blocks can be transmitted in one SS burst set, or a maximum of four synchronization signal blocks can be nominally transmitted. For a carrier whose carrier frequency range is between 3 GHz and 6 GHz, a maximum of eight synchronization signal blocks can be transmitted in one SS burst set, or a maximum of eight synchronization signal blocks can be nominally transmitted. For a carrier whose carrier frequency range is greater than 6 GHz, a maximum of 64 synchronization signal blocks can be transmitted in one SS burst set, or a maximum of 64 synchronization signal blocks can be nominally transmitted. Based on this, L may be 3, 7, and 63 for the foregoing three carrier frequency ranges respectively.

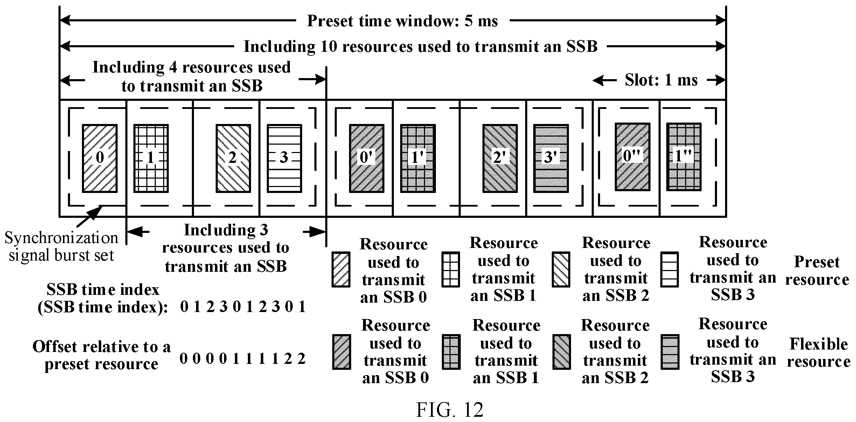

FIG. 12 is a schematic diagram illustrating that there are K x L second candidate resources and K first candidate resources between two first candidate resources. In FIG. 12, it is assumed that, in a preset time window of 5 ms, L = 3, candidate resources identified by 0, 1, 2, and 3 are preset resources used to transmit synchronization signal blocks SSB 0, SSB 1, SSB 2, and SSB 3 respectively, which may also be understood as locations of time resources in which the synchronization signal blocks SSB 0/SSB 1/SSB 2/SSB 3 are located, and candidate resources identified by 0', 1', 2', and 3' are flexible resources used to transmit the synchronization signal blocks SSB 0, SSB 1, SSB 2, and SSB 3 respectively. The SSB 0 is a first synchronization signal block.

In FIG. 12, there are four resources (namely, the candidate resources identified by 0, 1, 2, and 3) used to transmit synchronization signal blocks between a preset resource used to transmit the SSB 0 and the first flexible resource used to transmit the SSB 0. To be specific, there are 1 x 3 second candidate resources (namely, the candidate resources identified by 1, 2, and 3) and one first candidate resource (namely, the candidate resource identified by 0). In this case, K = 1 and L = 3. There are eight resources (namely, the candidate resources identified by 0, 1, 2, 3, 0', 1', 2', and 3') used to transmit synchronization signal blocks between the preset resource used to transmit the SSB 0 and the second flexible resource used to transmit the SSB 0. To be specific, there are 2 x 3 second candidate resources (namely, the candidate resources identified by 1, 2, 3, 1', 2', and 3') and two first candidate resources (namely, the candidate resources identified by 0 and 0'). In this case, K = 2 and L = 3.

An implementation in which a flexible resource used to transmit a synchronization signal block is obtained after a preset resource used to transmit the synchronization signal block is moved in a unit of an SS burst set periodicity in time can reduce complexity of combined PBCH detection by the terminal device. This is because in this implementation, the terminal device only needs to consider impact of different SSB time indexes on combined PBCH detection. However, if a resource used to transmit a same synchronization signal block is not moved in a unit of an SS burst set periodicity, but an implementation in which a preset resource and a flexible resource appear alternately, the terminal device further needs to consider impact of an "offset of each different candidate resource relative to the preset resource" on combined detection when performing combined detection in an SS burst set. Consequently, complexity of combined detection by the terminal device is increased.

When there are K x L second candidate resources and K first candidate resources between any two of the plurality of first candidate resources, it is assumed that candidate resources used to transmit a synchronization signal block in the preset time window may be represented by a first sequential resource, a second sequential resource, and the like for the synchronization signal block in chronological order. For example, the candidate resource identified by 0 in FIG. 12 may be considered as a first sequential resource for the SSB 0, and the candidate resource identified by 0' may be a second sequential resource for the SSB 0. If a channel on an unlicensed frequency band corresponding to a first sequential resource for a synchronization signal block is in an idle state, regarding whether CCA needs to be performed before transmission of other synchronization signal blocks in an SS burst set in which the synchronization signal block is located, there are the following three cases:

Case 1:

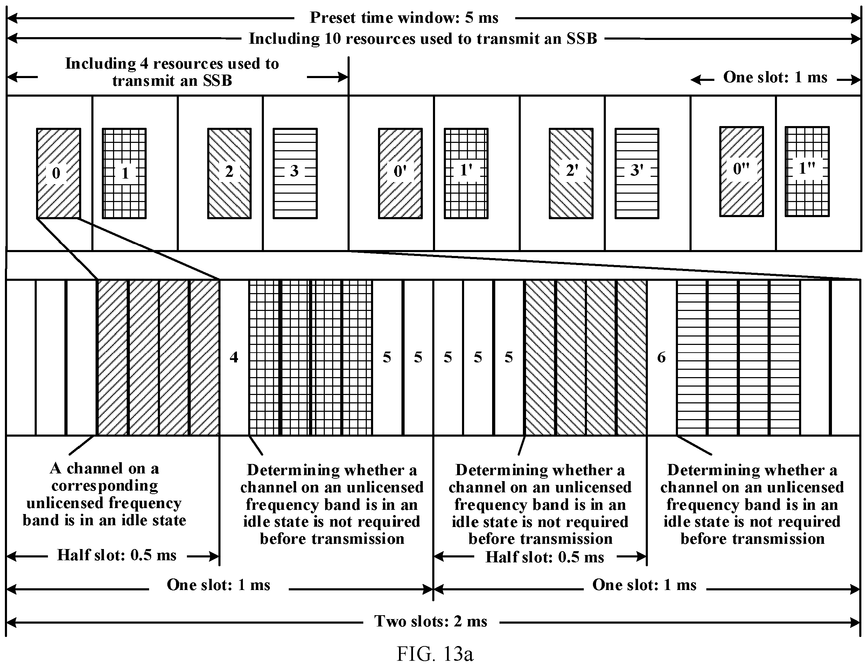

CCA needs to be performed for none of the other synchronization signal blocks before transmission, as shown in FIG. 13a.

In FIG. 13a, a channel on an unlicensed frequency band corresponding to a first sequential resource for an SSB 0 is in an idle state, and the access network device sends the SSB 0 to the terminal device on the first sequential resource for the SSB 0. In this case, for other synchronization signal blocks SSB 1, SSB 2, and SSB 3 in an SS burst set in which the SSB 0 is located, the access network device may not need to perform CCAwhen sending the SSB 1, the SSB 2, and the SSB 3 on first preset resources corresponding to the SSB 1, the SSB 2, and the SSB 3 respectively. In addition, to ensure use of unlicensed frequency band resources by the access network device, areas marked by "4", "5", and "6" in FIG. 13a need to be padded with some signals.

Case 2:

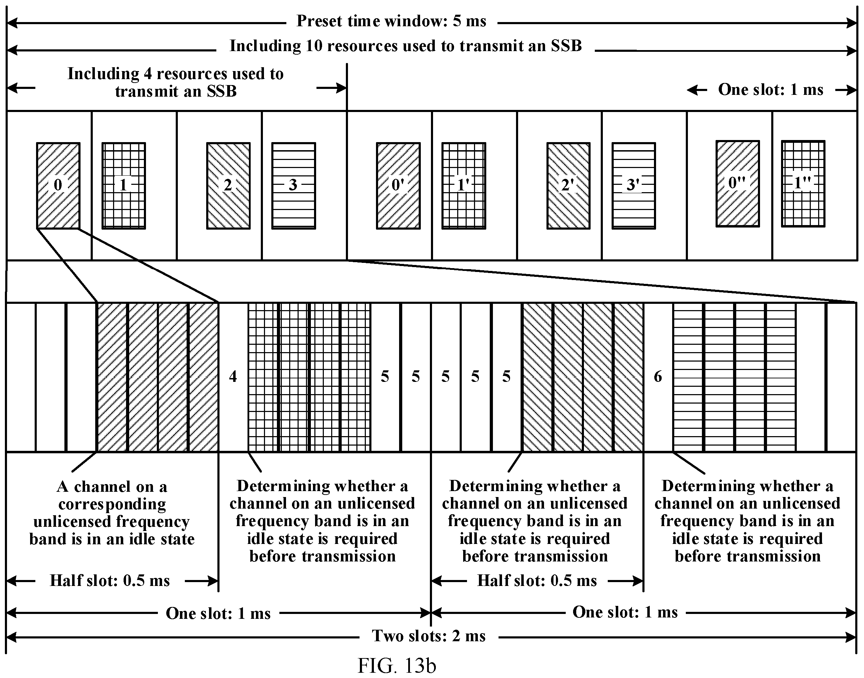

CCA needs to be performed for all the other synchronization signal blocks before transmission, as shown in FIG. 13b.

In FIG. 13b, a channel on an unlicensed frequency band corresponding to a first sequential resource for an SSB 0 is in an idle state, and the access network device sends the SSB 0 to the terminal device on the first sequential resource for the SSB 0. In this case, for other synchronization signal blocks SSB 1, SSB 2, and SSB 3 in an SS burst set in which the SSB 0 is located, the access network device needs to perform CCAwhen sending the SSB 1, the SSB 2, and the SSB 3 on first preset resources corresponding to the SSB 1, the SSB 2, and the SSB 3 respectively. If a CCA result is that a channel on an unlicensed frequency band corresponding to a first preset resource is not in an idle state, the access network device does not send, on the first preset resource, a synchronization signal block corresponding to the first preset resource.

Case 3:

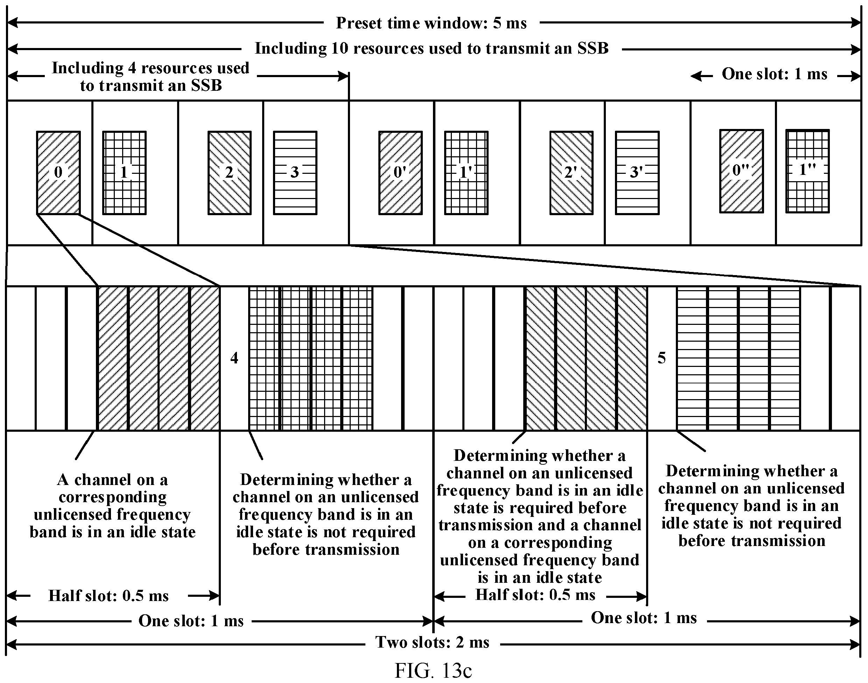

CCA needs to be performed for one part of the other synchronization signal blocks before transmission, but CCA does not need to be performed for the other part of the other synchronization signal blocks before transmission, as shown in FIG. 13c.

In FIG. 13c, a channel on an unlicensed frequency band corresponding to a first sequential resource for an SSB 0 is in an idle state, and the access network device sends the SSB 0 to the terminal device on the first sequential resource for the SSB 0. In this case, for other synchronization signal blocks SSB 1, SSB 2, and SSB 3 in an SS burst set in which the SSB 0 is located, some synchronization signal blocks that do not require CCA have at least one of the following features: 1. A candidate resource occupied by the synchronization signal block and the first order resource for the SSB 0 are located in a same slot. 2. A time interval between a start location of a candidate resource occupied by the synchronization signal block and an end location of the first sequential resource for the SSB 0 is less than a specific threshold. 3. A time interval between a start location of a candidate resource occupied by the synchronization signal block and an end location of a candidate resource occupied by another synchronization signal block that is closest to the synchronization signal block and that has been transmitted by the access network device before the synchronization signal block is less than a specific threshold. 4. A candidate resource occupied by the synchronization signal block and a candidate resource occupied by another synchronization signal block that is closest to the synchronization signal block and that has been transmitted by the access network device before the synchronization signal block are located in a same slot.

In FIG. 13c, the channel on the unlicensed frequency band corresponding to the first sequential resource used to transmit the SSB 0 is in an idle state, and the access network device sends the SSB 0 to the terminal device on the first sequential resource used to transmit the SSB 0. In FIG. 13c, there is one OFDM symbol between an end location of the first sequential resource used to transmit the SSB 0 and a start location of a candidate resource used to transmit the SSB 1. Therefore, if the channel on the unlicensed frequency band corresponding to the first sequential resource used to transmit the SSB 0 is in an idle state, the access network device does not need to perform CCAwhen transmitting the SSB 1. On the other hand, because there are a relatively large quantity (that is, 5) of OFDM symbols between an end location of the candidate resource used to transmit the SSB 1 and a start location of a candidate resource used to transmit the SSB 2, when sending the SSB 2, the access network device needs to perform CCA to determine whether the SSB 2 can be sent on the unlicensed frequency band. If a channel on a corresponding unlicensed frequency band is in an idle state when the SSB 2 is sent, the access network device does not need to perform CCA when sending an SSB 3. If the access network device does not need to perform CCAwhen sending the SSB 3, a relationship between the SSB 3 and the SSB 2 may be understood as "a time interval between a start location of a candidate resource occupied by the SSB 3 and an end location of a candidate resource occupied by another synchronization signal block (namely, the SSB 2) that is closest to the SSB 3 and that has been transmitted by the access network device before the SSB 3 is less than a specific threshold", or may be understood as "a candidate resource occupied by the SSB 3 and a candidate resource occupied by another synchronization signal block (namely, the SSB 2) that is closest to the SSB 3 and that has been transmitted by the access network device before the SSB 3 are located in a same slot". Similar to the description of FIG. 13a, in FIG. 13c, for areas marked with "4" or "5", the access network device needs to pad signals to ensure right to use the unlicensed frequency band.

It should be noted that, in this embodiment of this application, an OFDM symbol occupied by a synchronization signal block is merely an implementation. In this application, a location of an OFDM symbol occupied by the synchronization signal block in a slot (Slot) is not specifically limited.

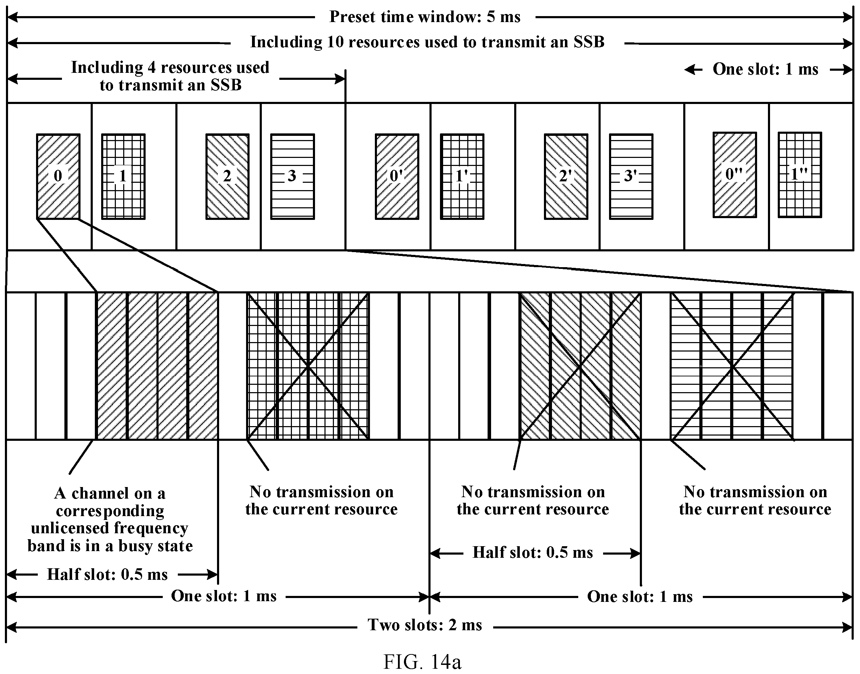

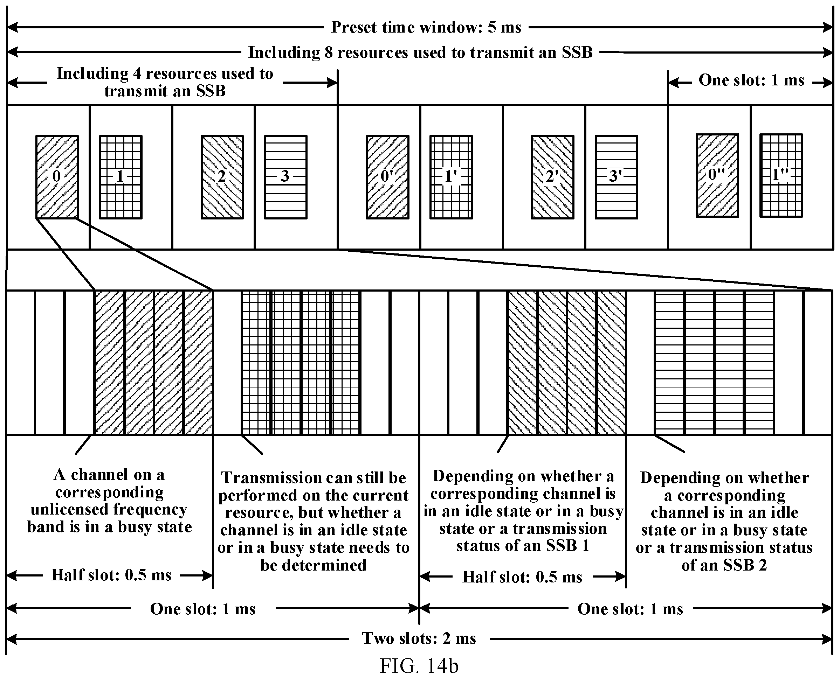

When there are K x L second candidate resources and K first candidate resources between any two of the plurality of first candidate resources, if a channel on an unlicensed frequency band corresponding to a first sequential resource for a synchronization signal block SSB 0 is in a busy state, the access network device determines whether a channel on an unlicensed frequency band corresponding to a second sequential resource for the SSB 0 is in an idle state, to determine whether the synchronization signal block SSB 0 can be transmitted on the second sequential resource. In this case, for another synchronization signal block different from the synchronization signal block SSB 0 in the SS burst set, for example, for transmission of the synchronization signal block SSB 1: In one manner, the synchronization signal block SSB 1 is not transmitted on a first sequential resource used to transmit the synchronization signal block SSB 1, referring to FIG. 14a. In another manner, the synchronization signal block SSB 1 may continue to be transmitted on a first sequential resource used to transmit the synchronization signal block SSB 1, but CCA needs to be performed before transmission, referring to FIG. 14b.

In FIG. 14a, if the channel on the unlicensed frequency band corresponding to the first sequential resource (namely, a candidate resource identified by 0) used to transmit the SSB 0 is in a busy state, possible transmission locations of the SSB 1, the SSB 2, and the SSB 3 also correspondingly change to respective second sequential resources used to transmit the SSB 1, the SSB 2, and the SSB 3. In FIG. 14b, if the channel on the unlicensed frequency band corresponding to the first sequential resource (namely, a candidate resource identified by 0) used to transmit the SSB 0 is in a busy state, the access network device may determine, through CCA, whether a channel on an unlicensed frequency band corresponding to a first sequential resource (namely, a candidate resource identified by 1) used to transmit the SSB 1 is in an idle state. If the channel is in an idle state, the terminal device may transmit the SSB 1 on the first sequential resource (namely, the candidate resource identified by 1) used to transmit the SSB 1. The same descriptions are true for the SSB 2 and the SSB 3, and details are not described herein again.

It should be noted that, for any synchronization signal block included in an SS burst set, regardless of whether a channel on an unlicensed frequency band corresponding to a first sequential resource of the synchronization signal block is in an idle state or in a busy state, any implementation in FIG. 13a to FIG. 13c and/or in FIG. 14a and FIG. 14b may be used for transmission of another synchronization signal block after the synchronization signal block in time. This is not specifically limited in this embodiment of this application. In addition, optionally, for transmission of a different SSB included in an SS burst set, depending on whether a channel for transmitting the SSB is in an idle state or in a busy state, transmission manners of different SSBs after the synchronization signal block in time may be the same or different. The transmission manners of the SSBs herein may include the implementations in FIG. 13a to FIG. 13c, or may include the implementations in FIG. 14a and FIG. 14b.

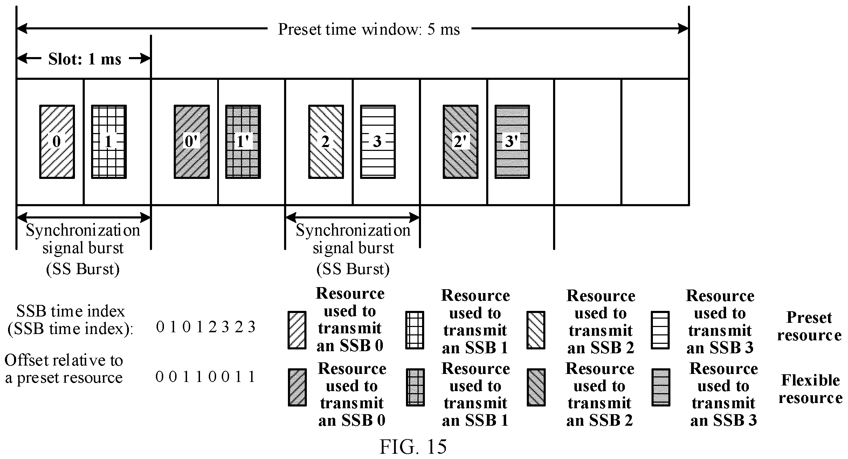

In addition, in this embodiment of this application, that there are K x L second candidate resources and K first candidate resources between any two of the plurality of first candidate resources may be understood in another manner: For a same synchronization signal block, a flexible resource used to transmit the synchronization signal block may be obtained after a preset resource used to transmit the synchronization signal block is moved in a unit of an SS burst periodicity in time. For some implementations based on this understanding, refer to the foregoing implementation in which a preset resource is moved in a unit of an SS burst set periodicity in time to obtain a flexible resource. A difference lies in that, when a preset resource is moved in a unit of an SS burst periodicity in time to obtain a flexible resource, L is obtained by subtracting 1 from a quantity of synchronization signal blocks that need to be transmitted (or "need to be nominally transmitted") by the access network device in an SS burst in a preset time window. One SS burst set may include at least two SS bursts, and a quantity of SSBs included in each SS burst may be the same or different. This is not specifically limited in this embodiment of this application. FIG. 15 illustrates an implementation of an SS burst. It is assumed that in a preset time window of 5 ms, the access network device needs to transmit four synchronization signal blocks, which are represented by an SSB 0, an SSB 1, an SSB 2, and an SSB 3, where a preset resource and a flexible resource for the synchronization signal block SSB 0 are identified by 0 and 0' respectively, a preset resource and a flexible resource for the synchronization signal block SSB 1 are identified by 1 and 1' respectively, a preset resource and a flexible resource for the synchronization signal block SSB 2 are identified by 2 and 2' respectively, and a preset resource and a flexible resource for the synchronization signal block SSB 3 are identified by 3 and 3' respectively. In this case, the synchronization signal block SSB 0 and the synchronization signal block SSB 1 form an SS burst, and the synchronization signal block SSB 2 and the synchronization signal block SSB 3 form another SS burst.

It should be noted that, in some specific cases, the access network device may transmit another synchronization signal block on a candidate resource corresponding to a synchronization signal block. For example, in FIG. 15, assuming that channels on unlicensed frequency bands corresponding to a first sequential resource (the candidate resource identified by 0) and a second sequential resource (the candidate resource identified by 0') that are used to transmit the synchronization signal block SSB 0 are in a busy state, and a channel on a licensed frequency band corresponding to a first sequential resource (the candidate resource identified by 1) used to transmit the synchronization signal block SSB 1 is in an idle state, the SSB 1 may be transmitted on the first sequential resource (the candidate resource identified by 1) for the SSB 1. When transmission of the SSB 1 has been completed, for the SS burst in which the synchronization signal block SSB 0 is located, a corresponding candidate resource that may be used to transmit a synchronization signal block includes only a second sequential resource (the candidate resource identified by 1') for the synchronization signal block SSB 1. Therefore, if a channel on a licensed frequency band corresponding to the second sequential resource (the candidate resource identified by 1') for the synchronization signal block SSB 1 is in an idle state, the second sequential resource (the candidate resource identified by 1') for the synchronization signal block SSB 1 may also be used to transmit the synchronization signal block SSB 0. Particularly, when a quantity of candidate resources that are included in the resource set and that have not been used to transmit a synchronization signal block is less than or equal to a quantity of synchronization signal blocks that need to be transmitted but have not been transmitted in the SS burst set or the SS burst, the access network device may transmit another synchronization signal block on a candidate resource corresponding to a synchronization signal block. Therefore, a transmission opportunity of a synchronization signal block that needs to be transmitted in the SS burst set or the SS burst can be increased as much as possible

It should be noted that, limited by a length of the preset time window, a quantity of resources included in an $X^{th}$ sequential resource set for transmitting an SS burst set and a quantity of resources included in a $Y^{th}$ sequential resource set for transmitting the SS burst set may be equal or unequal, where $X \neq Y$ It should be noted that, herein, the $X^{th}$ sequential resource set for transmitting the SS burst set may include: a set including $X^{th}$ sequential resources for transmitting all synchronization signal blocks included in the SS burst set; and the $Y^{th}$ sequential resource set for transmitting the SS burst set may include: a set including $Y^{th}$ sequential resources for transmitting all synchronization signal blocks included in the SS burst set. For example, in FIG. 12, candidate resources in the first dashed box may be considered as a first sequential resource set for transmitting an SS burst set, candidate resources in the second dashed box may be considered as a second sequential resource set for transmitting an SS burst set, and candidate resources in the third dashed box may be considered as a third sequential resource set for transmitting an SS burst set. The foregoing description also applies to an $X^{th}$ sequential resource set and a $Y^{th}$ sequential resource set for transmitting an SS burst, and this is not specifically limited.

In the method shown in FIG. 9, it may be set that there may be L second candidate resources and one first candidate resource between any two adjacent first candidate resources in the plurality of first candidate resources. Any two adjacent first candidate resources in the plurality of first candidate resources represent any two adjacent first candidate resources in time. In another explanation, any two adjacent first candidate resources in the plurality of first candidate resources represent an $X^{th}$ sequential resource and an $(X+1)^{th}$ sequential resource that are used to transmit the first synchronization signal block in time, where X is a positive integer, and X + 1 may be equal to a quantity of first candidate resources used to transmit the first synchronization signal block in the preset time window. For explanation of the sequential resource, refer to the foregoing description. That is, the sequential resource may be a candidate resource obtained after candidate resources used to transmit a synchronization signal block are arranged in chronological order in the preset time window. For example, in FIG. 12, in the preset time window, candidate resources identified by 0 and 0' may be respectively considered as a first sequential resource and a second sequential resource that are used to transmit a same synchronization signal block SSB 0 (in this example, the same synchronization signal block corresponds to a same SSB time index). If synchronization signal blocks correspondingly transmitted on the candidate resources identified by 0 and 0' are considered as the first synchronization signal block, the first sequential resource and the second sequential resource herein may be considered as first candidate resources that are adjacent in time. Likewise, if synchronization signal blocks correspondingly transmitted on the candidate resources identified by 0 and 0' are considered as the second synchronization signal block, the first sequential resource and the second sequential resource herein may be considered as second candidate resources that are adjacent in time. Apparently, in this embodiment of this application, slots in which two candidate resources that are used to transmit a same synchronization signal block and that are adjacent in time are located are not necessarily consecutive.

Particularly, in a possible scenario, second synchronization signal blocks that are transmitted by using the L second candidate resources are different from each other. As a benefit, transmission opportunities of the second synchronization signal blocks on the unlicensed frequency band are basically equal, so that a probability that the access network device transmits a synchronization signal block on the unlicensed frequency band in the preset time window is maximized.

In the foregoing possible case, optionally, for the any two adjacent first candidate resources, L first time intervals between one first candidate resource and the L second candidate resources are not completely the same as L second time intervals between the other first candidate resource and the L second candidate resources.

Alternatively, further, any one of the L first time intervals is different from any one of the L second time intervals. Second synchronization signal blocks that are transmitted by using the L second candidate resources are different from each other.

It should be noted that a time interval between two resources may be understood in a plurality of manners. Preferably, in one understanding manner (Manner 1), a time interval between two resources is a time interval between start locations of the two resources; in another understanding manner (Manner 2), a time interval between two resources is a time interval between start boundaries of half-slots in which start locations of the two resources are located; in still another understanding manner (Manner 3), a time interval between two resources is a time interval between start boundaries of slots in which the start locations of the two resources are located. Certainly, the time interval between the two resources may be understood in another manner, and this is not specifically limited herein.

The time interval between the two resources may be indicated by a quantity of OFDM symbols, or may be measured half-slots (Half-Slot), or may be measured in slots, or may be measured in mini-slots (Mini-Slot), or may be indicated in another manner. This is not specifically limited in this embodiment of this application.

It should be noted that although a time interval between two resources may be understood in different manners, when a relationship between L first time intervals and L second time intervals is measured, understanding manners of the time interval between the two resources are consistent. That is, the time interval between the two resources may be understood in the foregoing Manner 1, Manner 2, or Manner 3, or may be understood in another manner.

For example, in FIG. 12, it is assumed that a candidate resource identified by 0 is one first candidate resource, and candidate resources identified by 0' and 0" are two other first candidate resources. The two candidate resources identified by using 0 and 0' may be considered as two first candidate resources that are adjacent in time, and the two candidate resources identified by using 0' and 0" may also be considered as two first candidate resources that are adjacent in time. In addition, all the three candidate resources identified by 0, 0', and 0" are used to transmit a same synchronization signal block, for example, used to transmit the SSB 0. Three second candidate resources, identified by 1, 2, and 3 in FIG. 12, that are used to transmit the second synchronization signal blocks exist between the candidate resources identified by 0 and 0'. Time intervals (that is, three first time intervals) between the one first candidate resource (the candidate resource identified by 0) and the three second candidate resources (the three candidate resources identified by 1, 2, and 3) are 1 x Half-Slot, 2 x Half-Slot, and 3 x Half-Slot respectively. Time intervals (that is, three second time intervals) between the other first candidate resource (the candidate resource identified by 0') and the three second candidate resources (the three candidate resources identified by 1, 2, and 3) are 3 x Half-Slot, 2 x Half-Slot, and 1 x Half-Slot respectively.

Therefore, the case shown in FIG. 12 may be considered as a case in which any one of the L first time intervals is completely the same as any one of the L second time intervals.

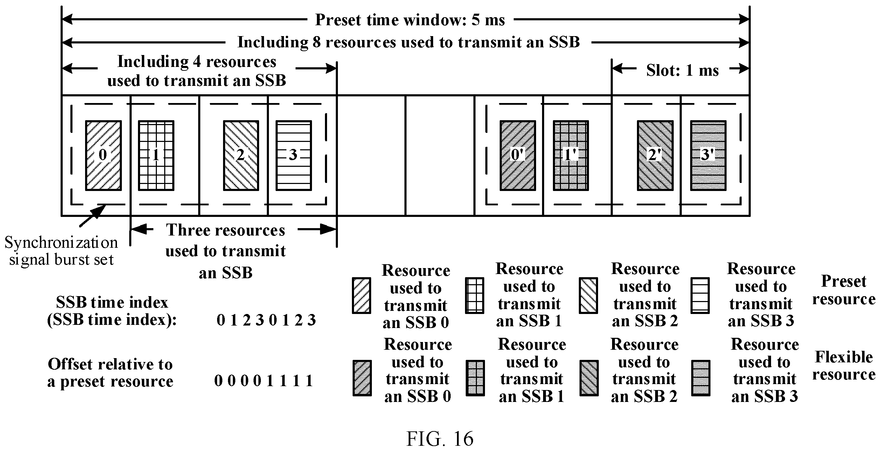

FIG. 16 illustrates another case different from that in FIG. 12. In FIG. 16, it is still assumed that a candidate resource identified by 0 is one first candidate resource, a candidate resource identified by 0' is another first candidate resource, and both the candidate resources identified by 0 and 0' are used to transmit a same synchronization signal block, for example, used to transmit the SSB 0. Three second candidate resources, identified by 1, 2, and 3 in FIG. 16, that are used to transmit the second synchronization signal blocks exist between the two candidate resources identified by 0 and 0'. In addition, second synchronization signal blocks that are transmitted by using the three second candidate resources correspond to the SSB 1, the SSB 2, and the SSB 3 respectively. Time intervals (that is, three first time intervals) between the one first candidate resource (the candidate resource identified by 0) and the three second candidate resources (the three candidate resources identified by 1, 2, and 3) are 1 x Half-Slot, 2 x Half-Slot, and 3 x Half-Slot respectively. Time intervals (that is, three second time intervals) between the other first candidate resource (the candidate resource identified by 0') and the three second candidate resources (the three candidate resources identified by 1, 2, and 3) are 5 x Half-Slot, 4 x Half-Slot, and 3 x Half-Slot respectively. Therefore, in the case shown in FIG. 16, for two adjacent first candidate resources, three first time intervals between one first candidate resource and the three second candidate resources are not completely the same as three second time intervals between the other first candidate resource and the three second candidate resources. The case shown in FIG. 16 is more helpful to reduction of complexity of combined PBCH detection that that in FIG. 12.

As described above, the synchronization signal block set may be considered as an SS burst, or may be considered as an SS burst set. The foregoing implementation of limiting the L first time intervals and the L second time intervals also applies to an implementation in which the synchronization signal block set is an SS burst.

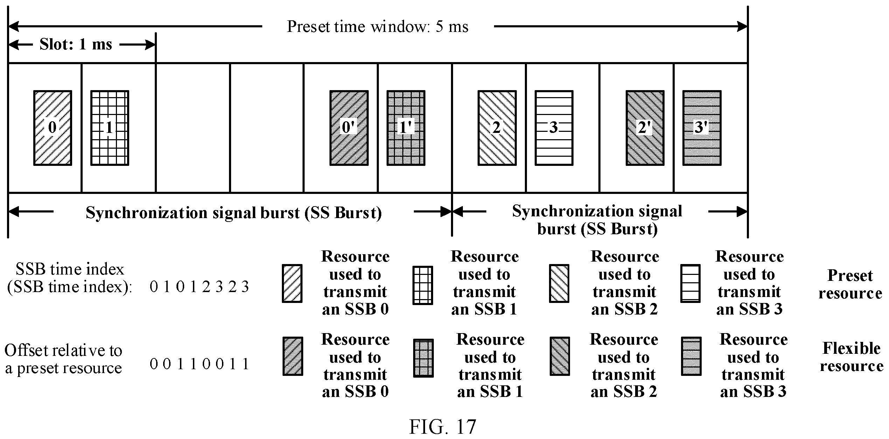

FIG. 17 shows distribution of candidate resources in an SS burst. A relationship between a plurality of candidate resources included in the first SS burst in a preset time window meets the following: Any one of the L first time intervals is different from any one of the L second time intervals. A relationship between a plurality of candidate resources included in the second SS burst in the preset time window may also meet the following: L first time intervals between one first candidate resource and L second candidate resources are completely the same as L second time intervals between another first candidate resource and the L second candidate resources. For a specific implementation, refer to the foregoing description.

It should be noted that in the implementations shown in FIG. 12, FIG. 16, and FIG. 19, the time interval may be indicated by a time interval between two SSBs or start boundaries of slots in which start locations of two SSBs are located, and the time interval may be measured in half-slots.

In this embodiment of this application, it is assumed that, a set including preset resources required for transmitting synchronization signal blocks included in an SS burst set is a preset resource set, and a set including flexible resources required for transmitting the synchronization signal blocks included in the SS burst set is a flexible resource set. For example, in FIG. 12, a resource set including candidate resources identified by 0, 1, 2, and 3 may be considered as a preset resource set, a resource set including candidate resources identified by 0', 1', 2', and 3' may be considered as a flexible resource set, and a resource set including candidate resources identified by using 0" and 1" may be considered as another flexible resource set. Preferably, the preset resource set and the flexible resource set are inconsecutive in time; in other words, a slot in which the last candidate resource included in the preset resource set is located and a slot in which the first candidate resource included in the flexible resource set is located are not consecutive slots; in other words, a half-slot in which the last candidate resource included in the preset resource set is located and a half-slot in which the first candidate resource included in the flexible resource set is located are not consecutive slots. For example, in FIG. 16, a preset resource set including candidate resources identified by 0, 1, 2, and 3 and a flexible resource set including candidate resources identified by 0', 1', 2', and 3' may be considered as inconsecutive.

The foregoing description also applies to an SSB burst. To be specific, it is assumed that, a set including preset resources required for transmitting synchronization signal blocks included in the SS burst is a preset resource set, and a set including flexible resources required for transmitting the synchronization signal blocks included in the SS burst is a flexible resource set. For example, in FIG. 17, a preset resource set including candidate resources identified by 0 and 1 and a flexible resource set including candidate resources identified by 0' and 1' may be considered as inconsecutive, and a preset resource set including candidate resources identified by 2 and 3 and a flexible resource set including candidate resources identified by 2' and 3' may be considered as consecutive.

In the method shown in FIG. 9, optionally, each of the L second synchronization signal blocks that are correspondingly transmitted by using the L second candidate resources included between any two adjacent first candidate resources includes a PBCH, and the PBCH included in each of the L second synchronization signal blocks has a same payload. Further, a PBCH payload included in each of the L second synchronization signal blocks is the same as a PBCH payload included in the first synchronization signal block correspondingly transmitted on the first candidate resource. It should be noted that one understanding of the same PBCH payload herein may be that content indicated by effective information bits is the same. According to the foregoing description of the PBCH, the PBCH included in each of the L second synchronization signal blocks has a same payload, and it may be easy for the terminal device to identify different SS burst sets or different SS bursts and then perform combined detection on PBCHs in the SS burst set or the SS burst, so that complexity of combined PBCH detection is reduced.

In the method shown in FIG. 9, optionally, a time interval between the any two adjacent first candidate resources in the plurality of first candidate resources is the same as a time interval between any two adjacent second candidate resources used to transmit a same second synchronization signal block.

For explanation of the time interval between the candidate resources, refer to related descriptions of the foregoing "time interval between two resources". Details are not described herein again.

The two adjacent first candidate resources may be understood as an $X^{th}$ sequential resource and an $(X+1)^{th}$ sequential resource that are used to transmit the first synchronization signal block, where $X \geq 1$. For example, in FIG. 16, the candidate resource identified by 0 and the candidate resource identified by 0' are two adjacent first candidate resources.

According to this implementation, time intervals between a plurality of candidate resources respectively corresponding to different synchronization signal blocks may be indicated by a same offset, so that complexity of offset design by the access network device can be reduced. Correspondingly, when learning of time intervals between a plurality of candidate resources for a synchronization signal block, the terminal device can learn of time intervals between a plurality of candidate resources for another synchronization signal block by using same offset information. Therefore, corresponding design complexity of the terminal device is also relatively low.

For example, in FIG. 16, a time interval between the two adjacent first candidate resources, namely, the candidate resource identified by 0 and the candidate resource identified by 0', is same as a time interval between the two adjacent second candidate resources, namely, the candidate resource identified by 1 and the candidate resource identified by 1', and is the same as a time interval between the two adjacent second candidate resources, namely, the candidate resource identified by 2 and the candidate resource identified by 2', and is also the same as a time interval between the two adjacent second candidate resources, namely, the candidate resource identified by 3 and the candidate resource identified by 3'. The candidate resource identified by 1 and the candidate resource identified by 1' are candidate resources used to transmit a same second synchronization signal block (namely, the SSB 1), the candidate resource identified by 2 and the candidate resource identified by 2' are candidate resources used to transmit a same second synchronization signal block (namely, the SSB 2), and the candidate resource identified by 3 and the candidate resource identified by 3' are candidate resources used to transmit a same second synchronization signal block (namely, the SSB 3).

In addition, in the method shown in FIG. 9, when the access network device does not transmit M second synchronization signal blocks in the L second synchronization signal blocks in the preset time window, some or all candidate resources in P second candidate resources used to transmit the M second synchronization signal blocks may be used as the first candidate resources to transmit the first synchronization signal block, where $1 \leq M \leq L$, and $P \geq M$.

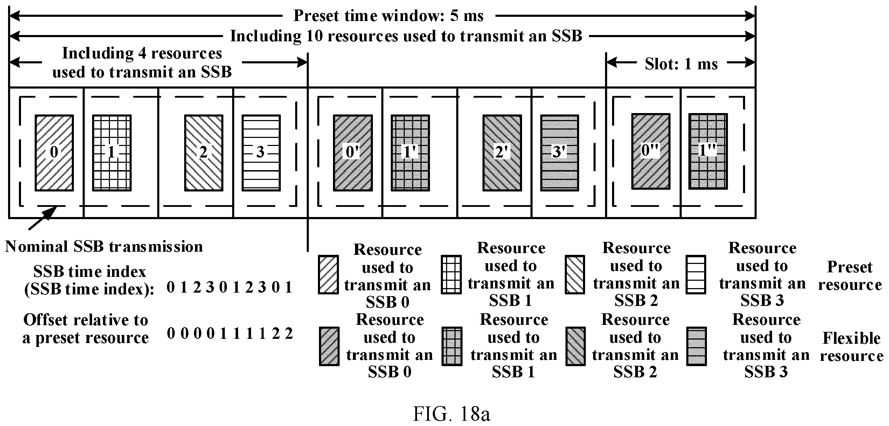

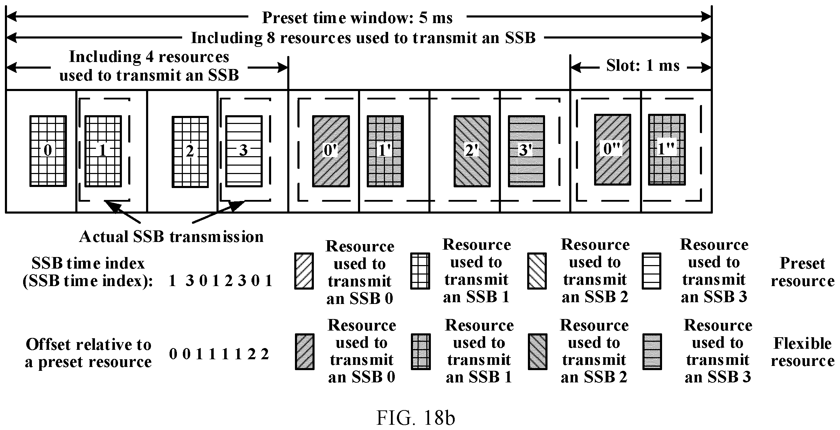

As described above, in this embodiment of this application, SSB transmission includes nominal SSB transmission and actual SSB transmission. The nominal SSB transmission merely indicates possible transmission of a synchronization signal block, and the actual SSB transmission is actual transmission of a synchronization signal block by the access network device. For example, the nominal SSB transmission may be shown in FIG. 18a, and actual SSB transmission may be shown in FIG. 18b. In FIG. 18b, it is assumed that the access network device transmits only the SSB 1 and the SSB 3 in the preset time window.

That the access network device does not transmit M second synchronization signal blocks in the L second synchronization signal blocks in the preset time window means as follows: During nominal SSB transmission, candidate resources used to transmit the M second synchronization signal blocks are reserved in the preset time window; however, the M second synchronization signal blocks do not need to be transmitted during actual transmission (for example, there is no terminal device that establishes a connection to the access network device in beam directions corresponding to the M second synchronization signal blocks). In this case, some or all candidate resources in the P second candidate resources used to transmit the M second synchronization signal blocks may be used as the first candidate resources to transmit the first synchronization signal block, so that a transmission opportunity of the first synchronization signal block on the unlicensed frequency band is increased.

For example, in FIG. 18b, assuming that the access network device transmits only the SSB 1 and the SSB 3 in the preset time window, if the SSB 1 is considered as a first synchronization signal block, second candidate resources used to transmit the SSB 0 and the SSB 2 may be used to transmit the first synchronization signal block SSB 1. For example, in FIG. 18b, some or all candidate resources in candidate resources 0, 0', and 0" used to transmit the SSB 0 and candidate resources 2, 2', and 2" used to transmit the SSB 2 may be used to transmit the SSB 1. In addition, similarly, some or all candidate resources in the P second candidate resources used to transmit the M second synchronization signal blocks may alternatively be used to transmit second synchronization signal blocks other than the M second synchronization signal blocks in the L second synchronization signal blocks. For example, in FIG. 18b, the second candidate resource used to transmit the SSB 0 and the second candidate resource used to transmit the SSB 2 may alternatively be used to transmit the SSB 3 (if the SSB 3 is considered as a second synchronization signal block), and details are not described herein again.

It should be noted that in this embodiment of this application, any synchronization signal block corresponding to at least two candidate resources in the preset time window may be considered as a first synchronization signal block. Therefore, in FIG. 18b, the SSB 3 may also be considered as a first synchronization signal block, the SSB 1 is considered as a second synchronization signal block.

In the method shown in FIG. 9, optionally, the first synchronization signal block carries first offset indication information, and the first offset indication information is used to indicate a time interval between the plurality of first candidate resources; and/or each of the L second synchronization signal blocks carries second offset indication information, and the second offset indication information is used to indicate a time interval between at least one second candidate resource used to transmit the second synchronization signal block.

In this implementation, after detecting a synchronization signal block, the terminal device can determine a time location corresponding to the synchronization signal block, so as to restore system time. To achieve this, for a plurality of candidate resources used to transmit a same synchronization signal block, the terminal device may use absolute time location information of one of the candidate resources and time offset information of other candidate resources relative to the absolute time location, to represent time location information of all the candidate resources used to transmit the synchronization signal block.

For example, control information carried in the synchronization signal blocks transmitted on the preset resources used for transmission of the synchronization signal block set includes absolute time location information, and control information carried in the synchronization signal blocks transmitted on the flexible resources used for transmission of the synchronization signal block set includes time offset information relative to the absolute time location. Alternatively, for another example, control information carried in a synchronization signal block transmitted on a first sequential resource used for transmission of the synchronization signal block set includes absolute time location information, and control information carried in synchronization signal blocks transmitted on other sequential resources used for transmission of the synchronization signal block set includes time offset information relative to the absolute time location. More generally, that the first offset indication information carried in the first synchronization signal block may be used to indicate a time interval between the plurality of first candidate resources may also be understood as follows: The first offset indication information carried in the first synchronization signal block is used to indicate a time interval between a flexible resource and a preset resource that correspond to the first synchronization signal block. Similarly, the second offset indication information carried in the second synchronization signal block may be used to indicate the time interval between the at least one second candidate resource used to transmit the second synchronization signal block. Optionally, the time offset information may be carried in a PBCH included in a synchronization signal block. For example, the PBCH may carry offset indication information corresponding to the time offset information, and each piece of offset indication information corresponds to a specific piece of time offset information. The correspondence may be preconfigured, for example, in standard protocol specifications, or may be notified by using higher layer signaling. This is not specifically limited herein. Alternatively, the terminal device may determine the time offset information through blind detection. In other words, the time offset information may be implicitly carried in a synchronization signal block. For example, different time offset information is indicated by using different sequence forms of a DMRS used to demodulate a PBCH in an SSB, or is indicated in another implicit indication manner. This is not specifically limited herein.

It should be noted that in the foregoing implementation, for each of the L second synchronization signal blocks, there is at least one second candidate resource used to transmit the second synchronization signal block. Herein, a special case is that there is one second candidate resource used to transmit the second synchronization signal block. In this case, because offset indication information is not required to indicate a time interval between all second candidate resources used to transmit the second synchronization signal block, the second synchronization signal block may not carry the second offset indication information, or the second offset indication information carried in the second synchronization signal block is 0. This is because in this case, the second candidate resource used to transmit the second synchronization signal block may be understood as a preset resource for transmitting the second synchronization signal block. Except this special case, when there are at least two second candidate resources used to transmit the second synchronization signal block, for description of the second offset indication information, refer to the foregoing related description of the first offset indication information. Details are not described again.

In this implementation, after detecting a synchronization signal block, the terminal device can determine, by using offset indication information carried in the synchronization signal block, a time location corresponding to the synchronization signal block, so as to restore system time.

It should be noted that in the method shown in FIG. 9, the access network device may send the synchronization signal block sets to a plurality of terminal devices at the same time. For example, the access network device sends the synchronization signal block set to two terminal devices at the same time. One terminal device is in a connected (connected) state, and the other terminal device is in an idle (idle) state.

For the terminal device in the connected (connected) state and the terminal device in the idle (idle) state, candidate resource distribution in the two cases may be the same or different. When candidate resource distribution manners of the terminal device in the connected (connected) state and the terminal device in the idle (idle) state are different, in the preset time window, the access network device needs to send the synchronization signal block set by using a candidate resource distribution manner of the terminal device in the idle (idle) state as a benchmark. This is because when not accessing a core network, the terminal device in the idle (idle) state parses the synchronization signal block set based on the candidate resource distribution manner of the terminal device in the idle (idle) state. Therefore, if the access network device sends the synchronization signal set by using a candidate resource distribution manner of the terminal device in the connected (connected) state as a benchmark, the terminal device in the idle (idle) state cannot parse the synchronization signal block set, and then the terminal device in the idle (idle) state cannot access the core network. However, for the terminal device in the connected (connected) state, because the terminal device in the connected (connected) state has accessed the core network, the access network device may deliver a notification message (for example, RRC signaling) to the terminal device in the connected (connected) state, to instruct the terminal device in the connected (connected) state to parse the synchronization signal block set based on the candidate resource distribution manner of the terminal device in the idle (idle) state. In this case, the terminal device in the connected (connected) state can still correctly parse out the synchronization signal block set sent by the access network device.

Based on the foregoing embodiments, this application further provides schematic diagrams of candidate resource distribution in 12 cases. When sending a synchronization signal block set to a terminal device, an access network device may determine, based on candidate resource distribution in the following 12 cases, a resource set used for transmission of the synchronization signal block set.

Case 1:

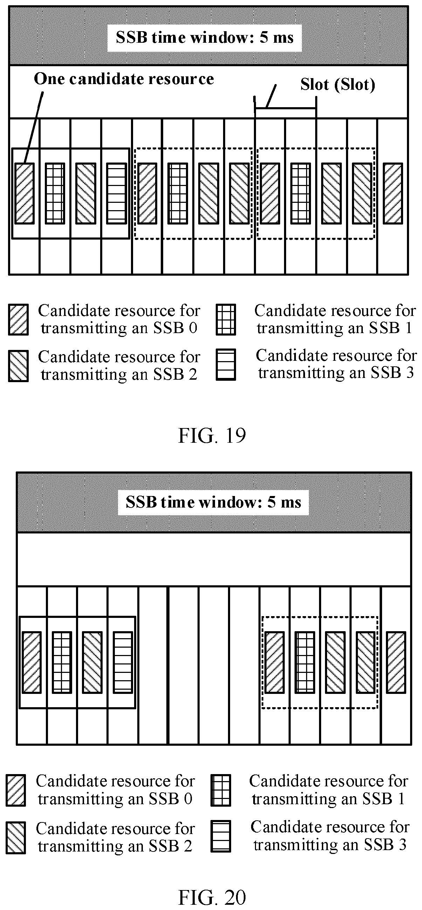

FIG. 19 is a schematic diagram of candidate resource distribution in Case 1. In FIG. 19, an SSB time window may be considered as another expression of a preset time window, and a synchronization signal block set sent in the preset time window includes four synchronization signal blocks SSB 0, SSB 1, SSB 2, and SSB 3. Four candidate resources in a solid box represent four preset resources used to transmit the synchronization signal blocks SSB 0, SSB 1, SSB 2, and SSB 3 respectively, and four candidate resources in each dashed box represent four flexible resources used to transmit the synchronization signal blocks SSB 0, SSB 1, SSB 2, and SSB 3 respectively. In addition to the candidate resources in the solid box and two dashed boxes, the SSB time window further includes one flexible resource used to transmit the synchronization signal block SSB 0.

In the schematic diagram of candidate resource distribution shown in FIG. 19, it may be considered that the following condition is met: A time location of any one of the plurality of first candidate resources does not overlap a time location of any one of the at least L second candidate resources. For example, assuming that the 1st candidate resource in the solid box is a first candidate resource, and the other three candidate resources are second candidate resources, time locations of the first candidate resource in the solid box and the three second candidate resources in the solid box do not overlap.

Similarly, in the schematic diagram of candidate resource distribution shown in FIG. 19, it may be considered that the following conditions are met: There are L second candidate resources and one first candidate resource between any two adjacent first candidate resources in the plurality of first candidate resources; for the any two adjacent first candidate resources, L first time intervals between one first candidate resource and the L second candidate resources are completely the same as L second time intervals between the other first candidate resource and the L second candidate resources; and a time interval between the any two adjacent first candidate resources in the plurality of first candidate resources is the same as a time interval between any two adjacent second candidate resources used to transmit a same second synchronization signal block. For example, a time range of a slot is shown in FIG. 19. In this case, a time interval between two adjacent first candidate resources used to transmit the SSB 0 may be represented by two slots, and a time interval between two adjacent second candidate resources used to transmit the SSB 1 (or the SSB 2 or the SSB 3) is also two slots.

For details, refer to FIG. 19. Details are not described herein again.

Case 2:

FIG. 20 is a schematic diagram of candidate resource distribution in Case 2. In FIG. 20, an SSB time window may be considered as another expression of a preset time window, and a synchronization signal block set sent in the preset time window includes four synchronization signal blocks SSB 0, SSB 1, SSB 2, and SSB 3. Four candidate resources in a solid box represent four preset resources used to transmit the synchronization signal blocks SSB 0, SSB 1, SSB 2, and SSB 3 respectively, and four candidate resources in each dashed box represent four flexible resources used to transmit the synchronization signal blocks SSB 0, SSB 1, SSB 2, and SSB 3 respectively. Four resources are vacated between the four preset resources and the four flexible resources, and the four vacated resources are not used to transmit a synchronization signal block. In addition to the candidate resources in the solid box and the dashed box, the SSB time window further includes one flexible resource used to transmit the synchronization signal block SSB 0.

In the schematic diagram of candidate resource distribution shown in FIG. 20, it may be considered that the following condition is met: A time location of any one of the plurality of first candidate resources does not overlap a time location of any one of the at least L second candidate resources. For example, assuming that the 1st candidate resource in the solid box is a first candidate resource, and the other three candidate resources are second candidate resources, time locations of the 1st candidate resource in the solid box and the three second candidate resources in the solid box do not overlap.

Similarly, in the schematic diagram of candidate resource distribution shown in FIG. 20, it may be considered that the following conditions are met: There are L second candidate resources and one first candidate resource between any two adjacent first candidate resources in the plurality of first candidate resources; for the any two adjacent first candidate resources, any one of L first time intervals between one first candidate resource and the L second candidate resources is different from any one of L second time intervals between the other first candidate resource and the L second candidate resources; and a time interval between the any two adjacent first candidate resources in the plurality of first candidate resources is the same as a time interval between any two adjacent second candidate resources used to transmit a same second synchronization signal block. For details, refer to FIG. 20. Details are not described herein again.

Case 3:

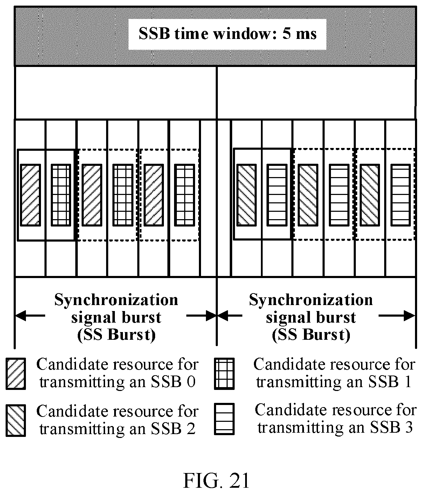

FIG. 21 is a schematic diagram of candidate resource distribution in Case 3. In FIG. 21, an SSB time window may be considered as another expression of a preset time window, and synchronization signal blocks sent in the preset time window include four synchronization signal blocks SSB 0, SSB 1, SSB 2, and SSB 3. The first SS burst includes the synchronization signal blocks SSB 0 and SSB 1, and the second SS burst includes the synchronization signal blocks SSB 2 and SSB 3. The first SS burst is used as an example. Two candidate resources in each solid box represent two preset resources used to transmit the synchronization signal blocks SSB 0 and SSB 1 respectively, and two candidate resources in each dashed box respectively represent two flexible resources used to transmit the synchronization signal blocks SSB 0 and SSB 1. The same description is true for the second SS burst, and details are not described herein again.

In the schematic diagram of candidate resource distribution shown in FIG. 21, a synchronization signal block set may be considered as a set of synchronization signal blocks transmitted in an SS burst. In other words, a synchronization signal block set herein may be considered as an SS burst. For example, in the first SS burst, the synchronization signal block set includes the synchronization signal blocks SSB 0 and SSB 1. In the schematic diagram of candidate resource distribution shown in FIG. 21, it may be considered that the following condition is met: A time location of any one the plurality of first candidate resources does not overlap a time location of any one of the at least L second candidate resources. For example, in the first SSB burst, assuming that the 1st candidate resource in the solid box is a first candidate resource, and the other three candidate resources are second candidate resources, time locations of the 1st candidate resource in the solid box and the three second candidate resources in the solid box do not overlap.

Similarly, in the schematic diagram of candidate resource distribution shown in FIG. 21, it may be considered that the following conditions are met: There are L second candidate resources and one first candidate resource between any two adjacent first candidate resources in the plurality of first candidate resources; for the any two adjacent first candidate resources, L first time intervals between one first candidate resource and the L second candidate resources are completely the same as L second time intervals between the other first candidate resource and the L second candidate resources; and a time interval between the any two adjacent first candidate resources in the plurality of first candidate resources is the same as a time interval between any two adjacent second candidate resources used to transmit a same second synchronization signal block. For details, refer to FIG. 21. Details are not described herein again.

Case 4:

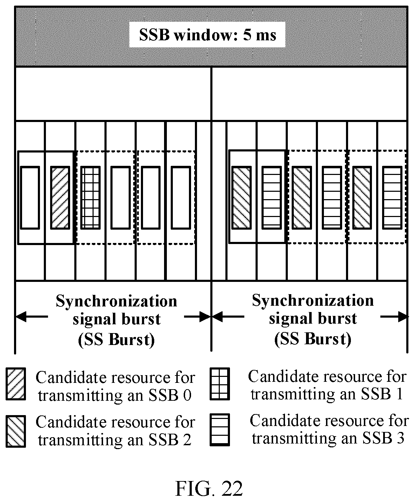

FIG. 22 is a schematic diagram of candidate resource distribution in Case 4. A candidate resource distribution manner shown in FIG. 22 is similar to the candidate resource distribution manner shown in FIG. 21. A difference lies in that in the candidate resource distribution manner shown in FIG. 22, a next candidate transmission location of a synchronization signal block SSB 0 is a location of a preset resource for a synchronization signal block SSB 1 in FIG. 22 because the synchronization signal block SSB 0 fails to obtain an unlicensed frequency band resource through contention before being sent.

Further, optionally, a candidate resource for the synchronization signal block SSB 1 may be moved ahead in sequence. To be specific, for example, in the first SS burst, six candidate resources in total are used to correspondingly transmit the synchronization signal block SSB 0 and the synchronization signal block SSB 1, and the candidate resources used to transmit the synchronization signal block SSB 0 and the synchronization signal block SSB 1 may be moved ahead in sequence. That is, after obtaining an unlicensed frequency band resource through contention, the access network device first sends the synchronization signal block SSB 0, and then sends the synchronization signal block SSB 1 on an available unlicensed frequency band resource that is subsequently determined. In this example, it may be understood that candidate resources used to transmit different synchronization signal blocks may overlap each other. In this embodiment of this application, "overlap each other" may be understood as follows: A same candidate resource may be used to transmit the synchronization signal block SSB 0 or may be used to transmit the synchronization signal block SSB 1.

Case 5:

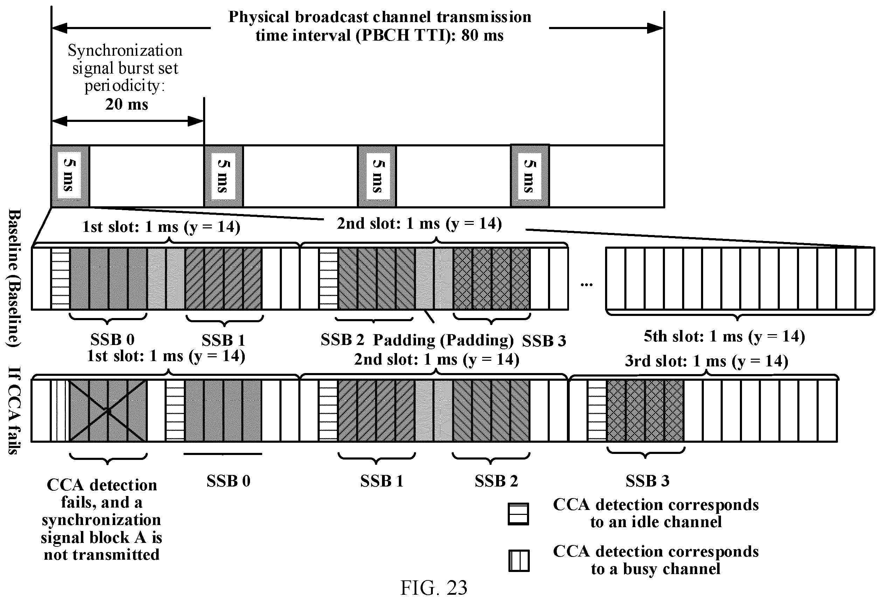

FIG. 23 is a schematic diagram of candidate resource distribution in Case 5. In FIG. 23, an SSB time window may be considered as another expression of a preset time window, and a synchronization signal block set sent in the preset time window includes four synchronization signal blocks SSB 0, SSB 1, SSB 2, and SSB 3. A difference between the implementations shown in FIG. 23 and FIG. 22 lies in that: The synchronization signal block set shown in FIG. 22 may be considered as an SS burst, and a candidate resource corresponding to a synchronization signal block included in the SS burst can only be in candidate resources corresponding to the SS burst, and cannot be out of preset resources corresponding to the SS burst.

The synchronization signal block set shown in FIG. 23 may be considered as an SS burst set.

In the schematic diagram of candidate resource distribution shown in FIG. 23, an access network device sequentially sends the four synchronization signal blocks SSB 0, SSB 1, SSB 2, and SSB 3 in order of the synchronization signal blocks. The access network device first performs CCA detection before sending each time. If it is detected that a corresponding channel on the candidate resource is in an idle state, a synchronization signal block can be sent. If it is detected that a corresponding channel on the candidate resource is in a busy state, a synchronization signal block cannot be sent.

In the schematic diagram of candidate resource distribution shown in FIG. 23, it may be considered that the following condition is met: A time location of any one of the plurality of first candidate resources overlaps a time location of any one of the at least L second candidate resources.

Case 6:

When a center carrier frequency of an unlicensed frequency band is less than 3 GHz and a subcarrier spacing is 15 kHz, one SS burst set includes four SSBs: an SSB 0, an SSB 1, an SSB 2, and an SSB 3 (the four SSBs may also be considered as nominally transmitted SSBs). In a 5 ms SSB time window (corresponding to the preset time window in this embodiment of this application), distribution of preset resources for transmitting the four SSBs may be the preset resource distribution in FIG. 12. An implementation of distribution of flexible resources for transmitting the four SSBs may be the flexible resource distribution in FIG. 12. Optionally, SSB indexes (SS Block Index) corresponding to the four SSBs transmitted on the preset resources (identified by 0/1/2/3 in FIG. 12) and the four SSBs transmitted on the first group of flexible resources (identified by 0'/1'/2'/3' in FIG. 12) may be indicated by eight different DMRS sequences. In other words, the eight different DMRS sequences or the eight different SS block indexes may represent different time information in the 5 ms time window. In this case, PBCHs included in the four SSBs correspondingly transmitted on the preset resources and the SSBs correspondingly transmitted on the first group of flexible resources have a same payload (payload). For the last two flexible resources (identified by 0" and 1" in the figure), to differentiate between time information in the 5 ms time window, 1-bit offset information may be added to PBCHs included in SSBs correspondingly transmitted on the last two flexible resources, to distinguish from locations of the previous eight candidate resources. Alternatively, other DMRS sequences different from the foregoing eight DMRS sequences are used to indicate time locations of the last flexible resources. Preferably, an SSB that is correspondingly transmitted on the flexible resource identified by 0" is different from an SSB that is correspondingly transmitted on the flexible resource identified by 0'.

As a benefit, this helps distinguish the second group of flexible resources (namely, the last two flexible resources) from the first group of flexible resources. Assuming that the synchronization signal block that is correspondingly transmitted on the flexible resource identified by 0' is the SSB 0, when the terminal device detects an SSB 4, that is, the detected synchronization signal block is not the first synchronization signal block (namely, the SSB 0) that needs to be transmitted in the SS burst set, the terminal device may determine that PBCHs corresponding to the SSB 4 and a synchronization signal block detected after the SSB 4 have different payloads. Therefore, the terminal device may perform PBCH combination on the previously received synchronization signal blocks based on the difference, thereby reducing complexity of combined PBCH detection.

Case 7:

When a center carrier frequency of an unlicensed frequency band is less than 3 GHz and a subcarrier spacing is 15 kHz, one SS burst set includes four SSBs: an SSB 0, an SSB 1, an SSB 2, and an SSB 3 (the four SSBs may also be considered as nominally transmitted SSBs). In a 5 ms SSB time window (corresponding to the preset time window in this embodiment of this application), an implementation of distribution of preset resources for transmitting the four SSBs may be the preset resource distribution in FIG. 16. An implementation of distribution of flexible resources for transmitting the four SSBs may be the flexible resource distribution in FIG. 16. In this case, in a 5 ms SSB time window, there are a total of eight candidate resources used to transmit the SSBs, and the eight candidate resources may be distinguished by using different DMRS sequences, or SS block indexes corresponding to the SSBs transmitted on the eight candidate resources may be indicated by using different DMRS sequences. In other words, PBCHs included in the SSBs correspondingly transmitted on the eight candidate resources have a same payload. As a benefit, PBCH combination can be implemented for any SSBs detected in the 5 ms SSB time window, so that reliability of SSB detection can be improved. After detecting an SSB, the terminal device may determine, based on a DMRS sequence, time information corresponding to the SSB in 5 ms, and then obtain other time information and system broadcast information by reading a PBCH. Optionally, the PBCH included in the SSB may further carry a quantity of SSBs included in the SS burst set. In this example, the quantity of SSBs is equal to 4.

Case 8:

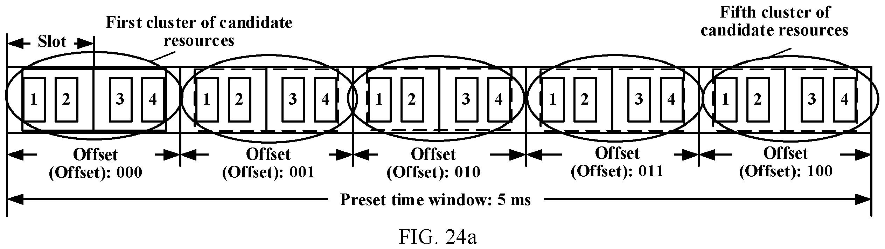

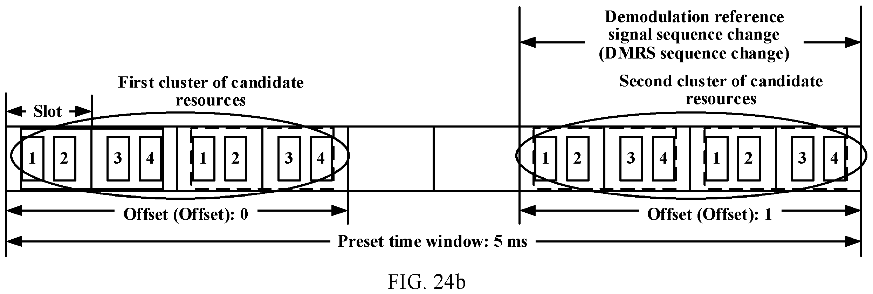

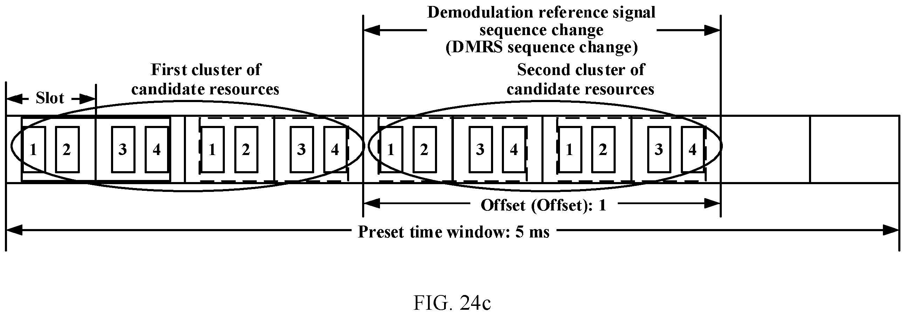

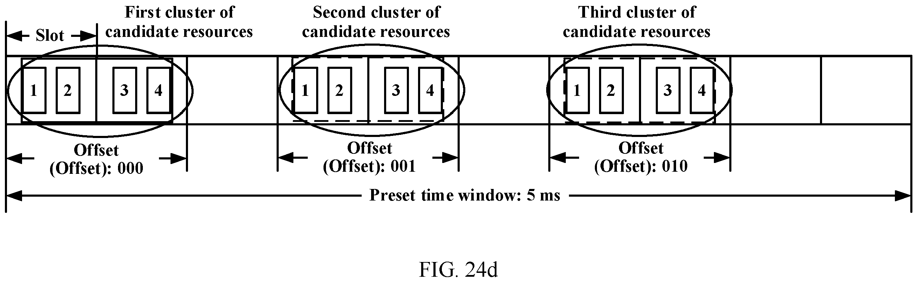

When a center carrier frequency of an unlicensed frequency band is less than 3 GHz and a subcarrier spacing is 30 kHz, one SS burst set includes four SSBs: an SSB 0, an SSB 1, an SSB 2, and an SSB 3 (the four SSBs may also be considered as nominally transmitted SSBs). In a 5 ms SSB time window (corresponding to the preset time window in this embodiment of this application), one implementation of candidate resources for transmitting the four SSBs may be shown in FIG. 24a, and the other three implementations may be shown in FIG. 24b, FIG. 24c, and FIG. 24d. In FIG. 24a to FIG. 24d, candidate resources included in a solid box are preset resources, and candidate resources included in a dashed box are flexible resources. Candidate resources identified by different numbers are used to correspondingly transmit different SSBs. For example, candidate resources identified by 1, 2, 3, and 4 may be used to correspondingly transmit the SSB 0, the SSB 1, the SSB 2, and the SSB 3 respectively. An offset in the figure may indicate an offset between time information of candidate resources used to transmit a same SSB and time information of a preset resource.

In FIG. 24a to FIG. 24d, different clusters may be obtained through division. The different clusters are distinguished by using offset information (represented by offsets in the figure) between candidate resources and preset resources that are included in the clusters, and different candidate resources included in a same cluster may be distinguished by using different DMRS sequences. For example, in FIG. 24b, SSBs correspondingly transmitted on the first cluster of candidate resources may be represented by different DMRS sequences, that is, different DMRS sequences represent different SS block indexes. PBCH bearer information included in SSBs corresponding to a same DMRS sequence in the second cluster of candidate resources and the first cluster of candidate resources may include information for distinguishing different offsets. For example, in FIG. 24b, an offset in a PBCH included in an SSB correspondingly transmitted on the first cluster of candidate resources is 0, and an offset of a PBCH included in an SSB correspondingly transmitted on the second cluster of candidate resources is 1. There is a similar description for FIG. 24c, and details are not described herein again. In FIG. 24d, different clusters of candidate resources are inconsecutive (herein, slots in which the different clusters are located are inconsecutive), so that the terminal device can distinguish between candidate resources belonging to a same cluster, thereby reducing complexity of PBCH combination.

Case 9:

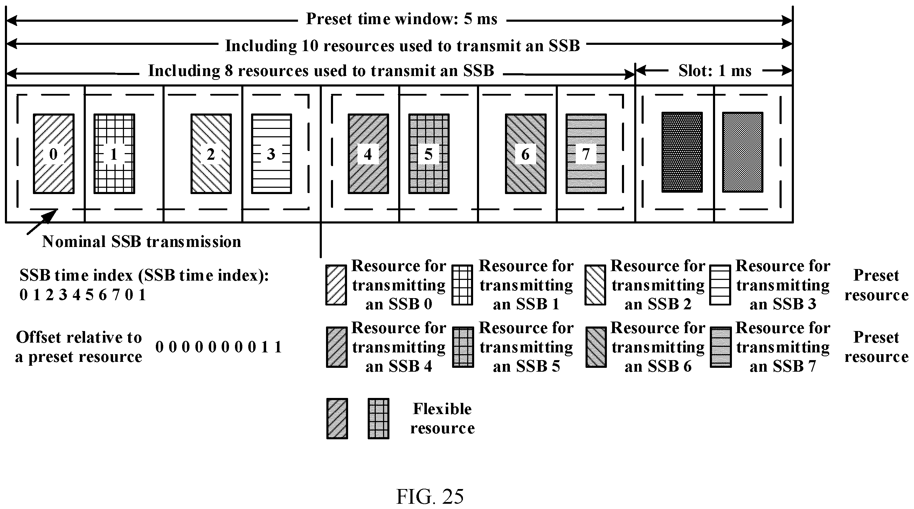

When a center carrier frequency of an unlicensed frequency band is between 3 GHz and 6 GHz and a subcarrier spacing is 15 kHz, one SS burst set includes eight SSBs: an SSB 0, an SSB 1, an SSB 2, an SSB 3, an SSB 4, an SSB 5, an SSB 6, and an SSB 7 (the eight SSBs may also be considered as nominally transmitted SSBs). In a 5 ms SSB time window (corresponding to the preset time window in this embodiment of this application), an implementation of candidate resources for transmitting the eight SSBs may be shown in FIG. 25. The SSBs (namely, the SSB 0 to the SSB 7) correspondingly transmitted on the eight preset resources may differ only in DMRS sequences, and PBCHs included in the SSBs carry a same payload. SSBs correspondingly transmitted on two flexible resources may be any two SSBs in the SSB 0 to the SSB 7. This is not specifically limited in this embodiment of this application.

Case 10:

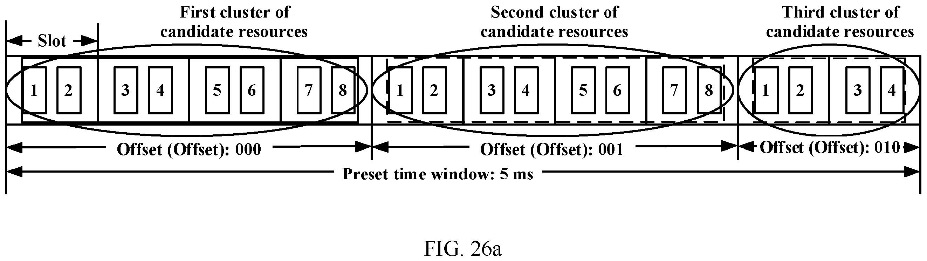

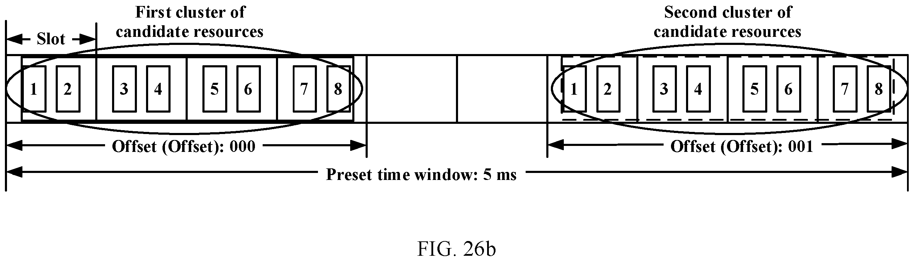

When a center carrier frequency of an unlicensed frequency band is between 3 GHz and 6 GHz and a subcarrier spacing is 30 kHz, one SS burst set includes eight SSBs: an SSB 0, an SSB 1, an SSB 2, an SSB 3, an SSB 4, an SSB 5, an SSB 6, and an SSB 7 (the eight SSBs may also be considered as nominally transmitted SSBs). In a 5 ms SSB time window (corresponding to the preset time window in this embodiment of this application), an implementation of candidate resources for transmitting the eight SSBs may be shown in FIG. 26a and FIG. 26b. Different clusters may be distinguished by using offset information (represented by offsets in FIG. 26a and FIG. 26b) between candidate resources and preset resources that are included in the clusters, and different candidate resources included in a same cluster may be distinguished by using different DMRS sequences. For annotation descriptions in FIG. 26a and FIG. 26b, refer to FIG. 24. Details are not described herein again. It should be noted that, in FIG. 26a, SSBs transmitted on candidate resource included in the third cluster of candidate resources may be flexible, that is, may not be in order of 1/2/3/4. It may be understood that, in this case, an offset corresponding to the third cluster of candidate resources may not be equal to 010, and even corresponding offsets between each flexible resource included in the third cluster of candidate resources and a preset resource may be different from each other, or only some offsets are the same.

Case 11:

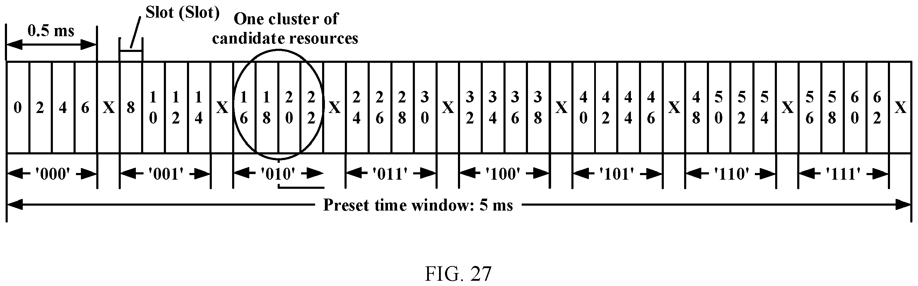

When a center carrier frequency of an unlicensed frequency band is greater than 6 GHz and a subcarrier spacing is 120 kHz, one SS burst set includes 64 SSBs: an SSB 0 to an SSB 63 (the 64 SSBs may also be considered as nominally transmitted SSBs). In a 5 ms SSB time window (corresponding to the preset time window in this embodiment of this application), an implementation of candidate resources for transmitting the 64 SSBs may be shown in FIG. 27. Two SSBs may be transmitted in one slot in FIG. 27, and data N corresponds to an SSB N and an SSB N-1. For example, a candidate resource identified by 0 is used to transmit the SSB 0 and the SSB 1, and a candidate resource identified by 62 is used to transmit the SSB 62 and the SSB 63. In FIG. 27, '000' to '111' are mainly used to distinguish between different clusters, and candidate resources included in each cluster may be indicated by using different DMRS sequences. Considering factors such as attenuation or loss of a high-frequency unlicensed frequency band, to ensure coverage performance of the access network device, the 64 SSBs may point to different beam directions. If the access network device sends SSBs in the beam directions in specific order (for example, clockwise or counterclockwise), considering a geographical location of the terminal device, a possible combination manner is combining SSBs corresponding to several adjacent beam directions for transmission. Therefore, different DMRS sequences are used in each cluster to distinguish between candidate resources, and different clusters are indicated by using explicit bits. As a benefit, this helps the terminal device combine detected SSBs (in other words, combine PBCHs included in the detected SSBs).In FIG. 27, a resource identified by X represents a flexible resource used to transmit an SSB. In the case shown in FIG. 27, a quantity of flexible resources is limited. Therefore, to increase a transmission probability of an SSB on an unlicensed frequency band, an SSB transmitted on the flexible resource is not specifically limited. Alternatively, optionally, as described above, considering the feature of a high-frequency beam transmission and the geographic location of the terminal device, the flexible resource may be used to transmit only an SSB included in a cluster before the flexible resource or a cluster after the flexible resource, or is used to transmit a beam direction included in a cluster before the flexible resource or a cluster after the flexible resource. For example, in FIG. 27, the first X may be used to transmit an SSB included in the first cluster of candidate resources (a cluster identified by '000' in FIG. 27), or used to transmit an SSB included in the second cluster of candidate resources (a cluster identified by '001' in FIG. 27).

Case 12:

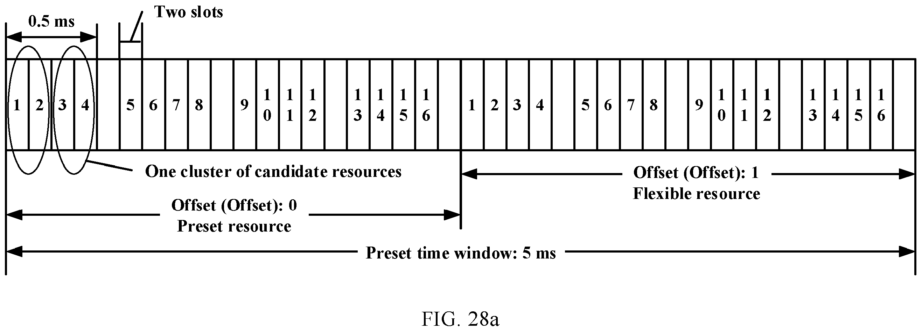

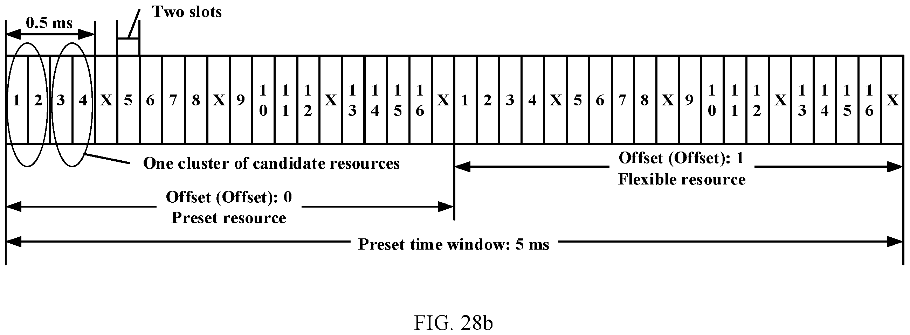

When a center carrier frequency of an unlicensed frequency band is greater than 6 GHz and a subcarrier spacing is 240 kHz, one SS burst set includes 64 SSBs: an SSB 0 to an SSB 63 (the 64 SSBs may also be considered as nominally transmitted SSBs). In a 5 ms SSB time window (corresponding to the preset time window in this embodiment of this application), an implementation of candidate resources for transmitting the 64 SSBs may be shown in FIG. 28a or FIG. 28b. In FIG. 28a and FIG. 28b, two slots include four SSBs, and a candidate resource identified by a number N is used to transmit an SSB [4*(N-1)+0], an SSB [4*(N-1)+1], an SSB [4*(N-1)+2], and an SSB [4*(N-1)+3]. For example, a candidate resource identified by a number 1 is used to transmit the SSB 0, the SSB 1, the SSB 2, and the SSB 3; a candidate resource identified by a number 16 is used to transmit the SSB 60, the SSB 61, the SSB 62, and the SSB 63. Every eight SSBs may be distinguished by using different DMRS sequences. For example, the SSB 0 to the SSB 7 are distinguished by using DMRSs, and the SSB 8 to the SSB 15 are also distinguished by using DMRSs. In this case, the SSB 0 to the SSB 7 and the SSB 8 to the SSB 15 need to be distinguished in another manner, for example, by adding explicit bits to PBCHs.

FIG. 28a shows a differentiation implementation. Adjacent eight candidate resources used to transmit SSBs are considered as one cluster, and different clusters may be distinguished by using control information carried on PBCHs. For example, for preset resources, there are eight clusters in total, and the clusters may be indicated by '000' to '111' respectively. For flexible resources, there are also eight clusters, and the clusters may also be indicated by '000' to '111' respectively. An offset in FIG. 28a represents an offset between a candidate resource (including a preset resource and a flexible resource) and a preset resource. For another example, in FIG. 28a, there are 128 candidate resources in total. The candidate resources may be divided into 16 groups in total, with eight candidate resources per group. The eight candidate resources in each group may be indicated by using different DMRS sequences, and the 16 groups may be distinguished by using 4-bit information, that is, '0000' to '1111' are used to distinguish between different groups.

In FIG. 28b, a candidate resource identified by X is a flexible resource used to transmit an SSB, and a quantity of flexible resources that are identified by X and that are used to transmit SSBs is not greater than 4. Considering the same factors as in Case 11, optionally, the flexible resource identified by X may be used to transmit only an SSB included in a cluster before the flexible resource or a cluster after the flexible resource, or is used to transmit a beam direction included in a cluster before the flexible resource or a cluster after the flexible resource, or is used to transmit only SSBs included in two clusters before the flexible resource or two clusters after the flexible resource, or is used to transmit only beam directions included in two clusters before the flexible resource or two clusters after the flexible resource. A manner of distinguishing the flexible resource identified by X from another candidate resource is not specifically limited in this embodiment of this application. It should be noted that in this candidate resource distribution implementation, the flexible resource may alternatively be a subset of the flexible resources shown in FIG. 28b.

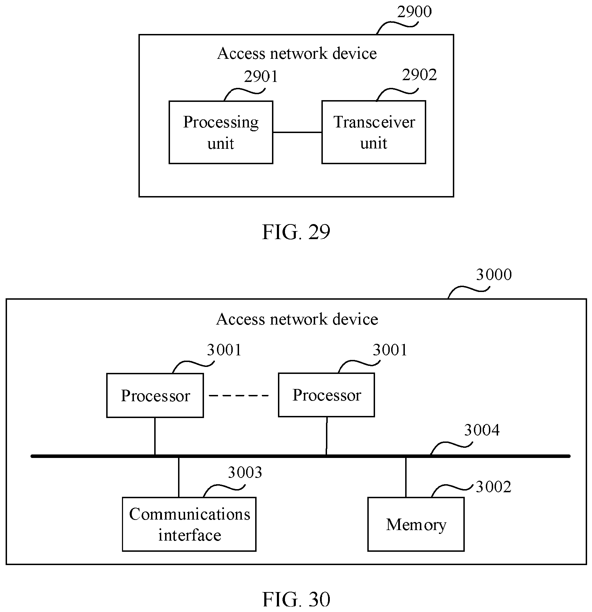

Based on the foregoing embodiments, an embodiment of this application further provides an access network device. The access network device may be configured to perform the operations performed by the access network device in the synchronization signal block transmission method shown in FIG. 9. Referring to FIG. 29, the access network device 2900 includes: a processing unit 2901 and a transceiver unit 2902.

The processing unit 2901 is configured to determine a resource set used for transmission of a synchronization signal block set in a preset time window in a cell using an unlicensed frequency band.

The synchronization signal block set includes a first synchronization signal block and L second synchronization signal blocks, and each synchronization signal block included in the synchronization signal block set includes a primary synchronization signal and a secondary synchronization signal, where $L \geq 1$; the resource set includes a plurality of first candidate resources used to transmit the first synchronization signal block and at least L second candidate resources used to transmit the L second synchronization signal blocks.

The transceiver unit 2902 is configured to send the first synchronization signal block to a terminal device on a first resource in the plurality of first candidate resources based on a clear channel assessment CCA result, where a channel on an unlicensed frequency band corresponding to the first resource is in an idle state; and/or configured to respectively send N second synchronization signal blocks in the L second synchronization signal blocks to the terminal device on N second resources in the at least L second candidate resources based on the CCA result, where the N second resources are in a one-to-one correspondence with the N second synchronization signal blocks, where $1 \leq N \leq L$, and a channel on an unlicensed frequency band corresponding to each of the N second resources is in an idle state.

Optionally, a time location of any one of the plurality of first candidate resources does not overlap a time location of any one of the at least L second candidate resources.

Optionally, there are K x L second candidate resources and K first candidate resources between any two of the plurality of first candidate resources, where K ≥ 1.

Optionally, there are L second candidate resources and one first candidate resource between any two adjacent first candidate resources in the plurality of first candidate resources.

Optionally, second synchronization signal blocks that are transmitted by using the L second candidate resources are different from each other.

Optionally, for the any two adjacent first candidate resources, L first time intervals between one first candidate resource and the L second candidate resources are not completely the same as L second time intervals between the other first candidate resource and the L second candidate resources.

Optionally, any one of the L first time intervals is different from any one of the L second time intervals.

Optionally, each of the L second synchronization signal blocks that are transmitted by using the L second candidate resources includes a PBCH, and the PBCH included in each of the L second synchronization signal blocks has a same payload.

Optionally, a time interval between the any two adjacent first candidate resources in the plurality of first candidate resources is the same as a time interval between any two adjacent second candidate resources used to transmit a same second synchronization signal block.

Optionally, when the access network device does not transmit M second synchronization signal blocks in the L second synchronization signal blocks in the preset time window in the cell, P second candidate resources used to transmit the M second synchronization signal blocks may be used as the first candidate resources to transmit the first synchronization signal block, where 1 ≤ M ≤ L, and P ≥ M.

Optionally, the first synchronization signal block carries first offset indication information, and the first offset indication information is used to indicate a time interval between the plurality of first candidate resources; and/or each of the L second synchronization signal blocks carries second offset indication information, and the second offset indication information is used to indicate a time interval between at least one second candidate resource used to transmit the second synchronization signal block.

It should be noted that, in this application, unit division is exemplary, and is merely a logical function division. In actual implementation, another division manner may be used. Functional units in the embodiments of this application may be integrated into one processing unit, or each unit may exist alone physically, or two or more units are integrated into one unit. The integrated unit may be implemented in a form of hardware, or may be implemented in a form of a software function unit.

Similarly, it should be noted that the access network device 2900 may be configured to perform the operations performed by the access network device in the synchronization signal block transmission method shown in FIG. 9. For an implementation that is not described in detail in the access network device 2900, refer to related descriptions in the synchronization signal block transmission method shown in FIG. 9.

Based on the foregoing embodiments, an embodiment of this application further provides an access network device. The access network device may perform the operations performed by the access network device in the method provided in the embodiment corresponding to FIG. 9, and may be the same as the access network device 2900 shown in FIG. 29.

Referring to FIG. 30, the access network device 3000 includes at least one processor 3001, a memory 3002, and a communications interface 3003. The at least one processor 3001, the memory 3002, and the communications interface 3003 are all connected by using a bus 3004.

The memory 3002 is configured to store a computer executable instruction.

The at least one processor 3001 is configured to execute the computer executable instruction stored in the memory 3002, so that the access network device 3000 exchanges data with another device (for example, a terminal device) in a communications system through the communications interface 3003, to perform the synchronization signal block transmission method provided in the foregoing embodiment, or the access network device 3000 exchanges data with another device (for example, a terminal device) in a communications system through the communications interface 3003, to implement some or all functions of the communications system.

The at least one processor 3001 may include different types of processors 3001, or include a same type of processor 3001. The processor 3001 may be any one of the following components with a calculation and processing capability: a central processing unit (central processing unit, CPU for short), an ARM processor, a field programmable gate array (field programmable gate array, FPGA for short), a dedicated processor, and the like. In an optional implementation, the at least one processor 3001 may be integrated into a many-core processor.

The memory 3002 may be any one or any combination of the following: a random access memory (random access memory, RAM for short), a read-only memory (read only memory, ROM for short), a non-volatile memory (non-volatile memory, NVM for short), a solid state drive (solid state drive, SSD for short), a mechanical hard disk, a magnetic disk, a disk array, or another storage medium. The communications interface 3003 is configured to exchange data between the access network device 3000 and another device (for example, a terminal device in a communications system). The communications interface 3003 may be any one or any combination of the following devices with a network access function: a network interface (for example, an Ethernet interface), a wireless network interface card, and the like.

The bus 3004 may include an address bus, a data bus, a control bus, and the like. For ease of denotation, the bus is represented by a thick line in FIG. 30. The bus 3004 may be any one or any combination of the following devices for wired data transmission: an industry standard architecture (industry standard architecture, ISA for short) bus, a peripheral component interconnect (peripheral component interconnect, PCI for short) bus, an extended industry standard architecture (extended industry standard architecture, EISA for short) bus, and the like.

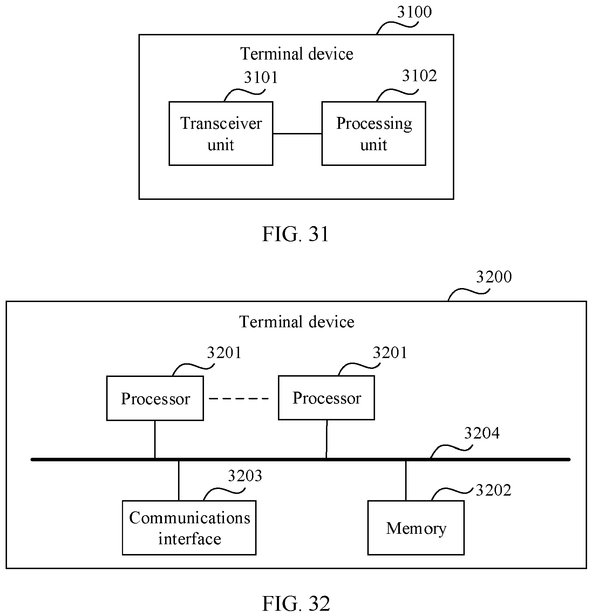

Based on the foregoing embodiments, an embodiment of this application further provides a terminal device 3100. The terminal device may be configured to perform the operations performed by the terminal device in the synchronization signal block transmission method shown in FIG. 9. Referring to FIG. 31, the terminal device 3100 includes: a transceiver unit 3101 and a processing unit 3102.

The transceiver unit 3101 is configured to receive, on a first resource in a plurality of first candidate resources, a first synchronization signal block sent by an access network device, where a channel on an unlicensed frequency band corresponding to the first resource is in an idle state; and/or configured to receive, on N second resources in at least L second candidate resources, N second synchronization signal blocks in L second synchronization signal blocks sent by the access network device, where the N second resources are in a one-to-one correspondence with the N second synchronization signal blocks, and a channel on an unlicensed frequency band corresponding to each of the N second resources is in an idle state.

Each synchronization signal block included in a synchronization signal block set that includes the first synchronization signal block and the L second synchronization signal blocks includes a primary synchronization signal and a secondary synchronization signal, where $1 \leq N \leq L$, and a resource set that includes the plurality of first candidate resources and the at least L second candidate resources is a resource set that is determined by the access network device and that is used for transmission of the synchronization signal block set in a preset time window in a cell using an unlicensed frequency band.

The processing unit 3102 is configured to determine time information based on the first synchronization signal block and/or the N second synchronization signal blocks.

Optionally, a time location of any one of the plurality of first candidate resources does not overlap a time location of any one of the at least L second candidate resources.

Optionally, there are K x L second candidate resources and K first candidate resources between any two of the plurality of first candidate resources, where K $\geq 1$.

Optionally, there are L second candidate resources and one first candidate resource between any two adjacent first candidate resources in the plurality of first candidate resources.

Optionally, second synchronization signal blocks that are transmitted by using the L second candidate resources are different from each other.

Optionally, for the any two adjacent first candidate resources, L first time intervals between one first candidate resource and the L second candidate resources are not completely the same as L second time intervals between the other first candidate resource and the L second candidate resources.

Optionally, any one of the L first time intervals is different from any one of the L second time intervals.

Optionally, each of the L second synchronization signal blocks that are transmitted by using the L second candidate resources includes a physical broadcast channel PBCH, and the PBCH included in each of the L second synchronization signal blocks has a same payload.

Optionally, a time interval between the any two adjacent first candidate resources in the plurality of first candidate resources is the same as a time interval between any two adjacent second candidate resources used to transmit a same second synchronization signal block.

Optionally, when the access network device does not transmit M second synchronization signal blocks in the L second synchronization signal blocks in the preset time window in the cell, P second candidate resources used to transmit the M second synchronization signal blocks may be used as the first candidate resources to transmit the first synchronization signal block, where $1 \leq M \leq L$, and $P \geq M$.

Optionally, the first synchronization signal block carries first offset indication information, and the first offset indication information is used to indicate a time interval between the plurality of first candidate resources; and/or each of the L second synchronization signal blocks carries second offset indication information, and the second offset indication information is used to indicate a time interval between at least one second candidate resource used to transmit the second synchronization signal block.

It should be noted that the terminal device 3100 may be configured to perform the operations performed by the terminal device in the synchronization signal block transmission method shown in FIG. 9. For an implementation that is not described in detail in the terminal device 3100, refer to related descriptions in the synchronization signal block transmission method shown in FIG. 9. Based on the foregoing embodiments, an embodiment of this application further provides a terminal device. The terminal device may be configured to perform the operations performed by the terminal device in the method provided in the embodiment corresponding to FIG. 9, and may be the same as the terminal device 3100 shown in FIG. 31.

Referring to FIG. 32, the terminal device 3200 includes at least one processor 3201, a memory 3202, and a communications interface 3203. The at least one processor 3201, the memory 3202, and the communications interface 3203 are all connected by using a bus 3204.

The memory 3202 is configured to store a computer executable instruction.

The at least one processor 3201 is configured to execute the computer executable instruction stored in the memory 3202, so that the terminal device 3200 exchanges data with another device (for example, an access network device) in a communications system through the communications interface 3203, to perform the synchronization signal block transmission method provided in the foregoing embodiment, or the terminal device 3200 exchanges data with another device (for example, an access network device) in a communications system through the communications interface 3203, to implement some or all functions of the communications system.

The at least one processor 3201 may include different types of processors 3201, or include a same type of processor 3201. The processor 3201 may be any one of the following components with a calculation and processing capability: a CPU, an ARM processor, an FPGA, a dedicated processor, and the like. In an optional implementation, the at least one processor 3201 may be integrated into a many-core processor.

The memory 3202 may be any one or any combination of the following storage media: a RAM, a ROM, an NVM, an SSD, a mechanical hard disk, a magnetic disk, a disk array, and the like.

The communications interface 3203 is configured to exchange data between the terminal device 3200 and another device (for example, an access network device in a communications system). The communications interface 3203 may be any one or any combination of the following devices with a network access function: a network interface (for example, an Ethernet interface), a wireless network interface card, and the like.

The bus 3204 may include an address bus, a data bus, a control bus, and the like. For ease of denotation, the bus is represented by a thick line in FIG. 32. The bus 3204 may be any one or any combination of the following components for wired data transmission: an ISA bus, a PCI bus, an EISA bus, and the like.

In conclusion, the embodiments of this application provide a synchronization signal block transmission method, an access network device, and a terminal device. By using the solutions provided in this application, an access network device in a wireless communications system operating on an unlicensed frequency band transmits a synchronization signal block to a terminal device.

A person skilled in the art should understand that the embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or the block diagrams of the method, the device (system), and the computer program product based on this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or another programmable device, to generate computer-implemented processing. Therefore, the instructions executed on the computer or the another programmable device provide steps for implementing a specific function in one or more processes in the flowcharts and/or in one or more blocks in the block diagrams.

Apparently, persons skilled in the art can make various modifications and variations to this application. This application is intended to cover these modifications and variations of this application provided that they fall within the scope of protection defined by the following claims.

**Claims**

1. A synchronization signal block transmission method, comprising:

   determining, by an access network device, a resource set used for transmission of a synchronization signal block set in a preset time window in a cell using an unlicensed frequency band, wherein
   the synchronization signal block set comprises a first synchronization signal block and L second synchronization signal blocks, and each synchronization signal block comprised in the synchronization signal block set comprises a primary synchronization signal and a secondary synchronization signal, wherein $L \geq 1$; the resource set comprises a plurality of first candidate resources used to transmit the first synchronization signal block and at least L second candidate resources used to transmit the L second synchronization signal blocks; and
   sending, by the access network device, N second synchronization signal blocks in the L second synchronization signal blocks to the terminal device on N second resources in the at least L second candidate resources based on the CCA result, wherein the N second resources are in a one-to-one correspondence with the N second synchronization signal blocks, wherein $1 \leq N \leq L$, and a channel on an unlicensed frequency band corresponding to each of the N second resources is in an idle state.

2. The method according to claim 1, wherein a time location of any one of the plurality of first candidate resources does not overlap a time location of any one of the at least L second candidate resources.

3. The method according to claim 1 or 2, wherein there are K x L second candidate resources and K first candidate resources between any two of the plurality of first candidate resources, wherein $K \geq 1$.

4. The method according to any one of claims 1-3, wherein each of the L second synchronization signal blocks transmitted by using the L second candidate resources comprises a physical broadcast channel PBCH, and the PBCH comprised in each of the L second synchronization signal blocks has a same payload.

5. The method according to any one of claims 1 to 4, wherein when the access network device does not transmit M second synchronization signal blocks in the L second synchronization signal blocks in the preset time window in the cell, P second candidate resources used to transmit the M second synchronization signal blocks may be used as the first candidate resources to transmit the first synchronization signal block, wherein $1 \leq M \leq L$, and $P \geq M$.

6. The method according to any one of claims 1 to 5, wherein the first synchronization signal block carries first offset indication information, and the first offset indication information is used to indicate a time interval between the plurality of first candidate resources.

7. A synchronization signal block transmission method, comprising:

   receiving, by the terminal device on N second resources in at least L second candidate resources, N second synchronization signal blocks in L second synchronization signal blocks sent by the access network device, wherein the N second resources are in a one-to-one correspondence with the N second synchronization signal blocks, and a channel on an unlicensed frequency band corresponding to each of the N second resources is in an idle state; wherein each synchronization signal block comprised in a synchronization signal block set that comprises the first synchronization signal block and the L second synchronization signal blocks comprises a primary synchronization signal and a secondary synchronization signal, wherein $1 \leq N \leq L$, and a resource set that comprises the plurality of first candidate resources and the at least L second candidate resources is a resource set that is determined by the access network device and that is used for transmission of the synchronization signal block set in a preset time window in a cell using an unlicensed frequency band; and
   determining, by the terminal device, time information based on the first synchronization signal block and/or the N second synchronization signal blocks.

8. The method according to claim 7, wherein a time location of any one of the plurality of first candidate resources does not overlap a time location of any one of the at least L second candidate resources.

9. The method according to claim 7 or 8, wherein there are K x L second candidate resources and K first candidate resources between any two of the plurality of first candidate resources, wherein $K \geq 1$.

10. The method according to any one of claims 7 to 9, wherein each of the L second synchronization signal blocks transmitted by using the L second candidate resources comprises a physical broadcast channel PBCH, and the PBCH comprised in each of the L second synchronization signal blocks has a same payload.

**11.** The method according to any one of claims 7 to 10, wherein when the access network device does not transmit M second synchronization signal blocks in the L second synchronization signal blocks in the preset time window in the cell, P second candidate resources used to transmit the M second synchronization signal blocks may be used as the first candidate resources to transmit the first synchronization signal block, wherein $1 \leq M \leq L$, and $P \geq M$.

**12.** The method according to any one of claims 7 to 11, wherein the first synchronization signal block carries first offset indication information, and the first offset indication information is used to indicate a time interval between the plurality of first candidate resources.

**13.** A access network device, comprising:

a processor; and
a memory, wherein the memory stores an execution instruction; and when the processor executes the execution instruction to enable the device to perform the method of any of claims 1 to 6.

**14.** A terminal device, comprising:

a processor; and
a memory, wherein the memory stores an execution instruction; and when the processor executes the execution instruction to enable the device to perform the method of any of claims 7 to 12.

**15.** A computer-readable storage medium having a program recorded thereon; wherein the program makes a computer execute the method of any of claims 1 to 12.

**Patentansprüche**

**1.** Synchronisationssignalblockübertragungsverfahren, umfassend:

Bestimmen, durch eine Zugangsnetzwerkvorrichtung, eines Ressourcensatzes, der für eine Übertragung eines Synchronisationssignalblocksatzes in einem vorher festgelegten Zeitfenster in einer Zelle unter Verwendung eines nicht lizenzierten Frequenzbandes verwendet wird, wobei
der Synchronisationssignalblocksatz einen ersten Synchronisationssignalblock und L zweite Synchronisationssignalblöcke umfasst, und jeder Synchronisationssignalblock, der in dem Synchronisationssignalblocksatz enthalten ist, ein primäres Synchronisationssignal und ein sekundäres Synchronisationssignal umfasst, wobei $L \geq 1$; wobei der Ressourcensatz eine Vielzahl von ersten Kandidatenressourcen, die verwendet werden, um den ersten Synchronisationssignalblock zu übertragen, und mindestens L zweite Kandidatenressourcen umfasst, die verwendet werden, um die L zweiten Synchronisationssignalblöcke zu übertragen; und
Senden, durch die Zugangsnetzwerkvorrichtung, von N zweiten Synchronisationssignalblöcken in den L zweiten Synchronisationssignalblöcken an die Endgerätvorrichtung auf N zweiten Ressourcen in den mindestens L zweiten Kandidatenressourcen basierend auf dem CCA-Ergebnis, wobei die N zweiten Ressourcen in einer Eins-zu-Eins-Entsprechung mit den N zweiten Synchronisationssignalblöcken sind, wobei $1 \leq N \leq L$, und ein Kanal auf einem nicht lizenzierten Frequenzband, der jedem der N zweiten Ressourcen entspricht, in einem Ruhezustand ist.

**2.** Verfahren nach Anspruch 1, wobei ein Zeitort einer beliebigen der Vielzahl von ersten Kandidatenressourcen einen Zeitort einer beliebigen der mindestens L zweiten Kandidatenressourcen nicht überlappt.

**3.** Verfahren nach Anspruch 1 oder 2, wobei K x L zweite Kandidatenressourcen und K erste Kandidatenressourcen zwischen beliebigen zwei der Vielzahl von ersten Kandidatenressourcen vorhanden sind, wobei $K \geq 1$.

**4.** Verfahren nach einem der Ansprüche 1 bis 3, wobei jeder der L zweiten Synchronisationssignalblöcke, die durch Verwenden der L zweiten Kandidatenressourcen übertragen werden, einen physischen Broadcast-Kanal PBCH umfasst und der PBCH, der in jedem der L zweiten Synchronisationssignalblöcke enthalten ist, eine gleiche Nutzlast aufweist.

**5.** Verfahren nach einem der Ansprüche 1 bis 4, wobei, wenn die Zugangsnetzwerkvorrichtung keine M zweiten Synchronisationssignalblöcke in den L zweiten Synchronisationssignalblöcken in dem vorher festgelegten Zeitfenster in der Zelle überträgt, P zweite Kandidatenressourcen, die verwendet werden, um die M zweiten Synchronisationssignalblöcke zu übertragen, als die ersten Kandidatenressourcen verwendet werden können, um den ersten Synchronisationssignalblock zu übertragen, wobei $1 \leq M \leq L$, und $P \geq M$.

**6.** Verfahren nach einem der Ansprüche 1 bis 5, wobei der erste Synchronisationssignalblock erste Versatzanzeigeinformationen trägt und die ersten Versatzanzeigeinformationen verwendet werden, um ein Zeitintervall zwischen der Vielzahl von ersten Kandidatenressourcen anzuzeigen.

**7.** Synchronisationssignalblockübertragungsverfahren, umfassend:

Empfangen, durch die Endgerätvorrichtung auf N zweiten Ressourcen in mindestens L zweiten Kandidatenressourcen, von N zweiten Synchronisationssignalblöcken in L zweiten Synchronisationssignalblöcken, die durch die Zugangsnetzwerkvorrichtung gesendet werden, wobei die N zweiten Ressourcen in einer Eins-zu-Eins-Entsprechung mit den N zweiten Synchronisationssignalblöcken sind und ein Kanal auf einem nicht lizenzierten Frequenzband, der jeder der N zweiten Ressourcen entspricht, in einem Ruhezustand ist; wobei jeder Synchronisationssignalblock, der in einem Synchronisationssignalblocksatz enthalten ist, der den ersten Synchronisationssignalblock und die L zweiten Synchronisationssignalblöcke umfasst, ein primäres Synchronisationssignal und ein sekundäres Synchronisationssignal umfasst, wobei $1 \leq N \leq L$, und ein Ressourcensatz, der die Vielzahl von ersten Kandidatenressourcen und die mindestens L zweiten Kandidatenressourcen umfasst, ein Ressourcensatz ist, der durch die Zugangsnetzwerkvorrichtung bestimmt wird, und der für die Übertragung des Synchronisationssignalblocksatzes in einem vorher festgelegten Zeitfenster in einer Zelle unter Verwendung eines nicht lizenzierten Frequenzbandes verwendet wird; und Bestimmen, durch die Endgerätvorrichtung, von Zeitinformationen basierend auf dem ersten Synchronisationssignalblock und/oder den N zweiten Synchronisationssignalblöcken.

**8.** Verfahren nach Anspruch 7, wobei ein Zeitort einer beliebigen der Vielzahl von ersten Kandidatenressourcen einen Zeitort einer beliebigen der mindestens L zweiten Kandidatenressourcen nicht überlappt.

**9.** Verfahren nach Anspruch 7 oder 8, wobei K x L zweite Kandidatenressourcen und K erste Kandidatenressourcen zwischen beliebigen zwei der Vielzahl von ersten Kandidatenressourcen vorhanden sind, wobei $K \geq 1$.

**10.** Verfahren nach einem der Ansprüche 7 bis 9, wobei jeder der L zweiten Synchronisationssignalblöcke, die durch Verwenden der L zweiten Kandidatenressourcen übertragen werden, einen physischen Broadcast-Kanal PBCH umfasst und der PBCH, der in jedem der L zweiten Synchronisationssignalblöcke enthalten ist, eine gleiche Nutzlast aufweist.

**11.** Verfahren nach einem der Ansprüche 7 bis 10, wobei, wenn die Zugangsnetzwerkvorrichtung keine M zweiten Synchronisationssignalblöcke in den L zweiten Synchronisationssignalblöcken in dem vorher festgelegten Zeitfenster in der Zelle überträgt, P zweite Kandidatenressourcen, die verwendet werden, um die M zweiten Synchronisationssignalblöcke zu übertragen, als die ersten Kandidatenressourcen verwendet werden können, um den ersten Synchronisationssignalblock zu übertragen, wobei $1 \leq M \leq L$, und $P \geq M$.

**12.** Verfahren nach einem der Ansprüche 7 bis 11, wobei der erste Synchronisationssignalblock erste Versatzanzeigeinformationen trägt und die ersten Versatzanzeigeinformationen verwendet werden, um ein Zeitintervall zwischen der Vielzahl von ersten Kandidatenressourcen anzuzeigen.

**13.** Zugangsnetzwerkvorrichtung, umfassend:

einen Prozessor; und
einen Speicher, wobei der Speicher eine Ausführungsanweisung speichert; und wenn der Prozessor die Ausführungsanweisung ausführt, die Vorrichtung aktiviert wird, um das Verfahren nach einem der Ansprüche 1 bis 6 durchzuführen.

**14.** Endgerätvorrichtung, umfassend:

einen Prozessor; und
einen Speicher, wobei der Speicher eine Ausführungsanweisung speichert; und wenn der Prozessor die Ausführungsanweisung ausführt, die Vorrichtung aktiviert wird, um das Verfahren nach einem der Ansprüche 7 bis 12 durchzuführen.

**15.** Computerlesbares Speichermedium, das ein darauf aufgezeichnetes Programm aufweist, wobei das Programm einen Computer veranlasst, das Verfahren nach einem der Ansprüche 1 bis 12 auszuführen.

**Revendications**

**1.** Procédé de transmission de bloc de signaux de synchronisation, comprenant :

la détermination, par un dispositif de réseau d'accès, d'un ensemble de ressources utilisé pour la transmission d'un ensemble de blocs de signaux de synchronisation dans une fenêtre temporelle prédéfinie dans une cellule à l'aide d'une bande de fréquences sans licence, dans lequel

l'ensemble de blocs de signaux de synchronisation comprend un premier bloc de signaux de synchronisation et L seconds blocs de signaux de synchronisation, et chaque bloc de signaux de synchronisation compris dans l'ensemble de blocs de signaux de synchronisation comprend un signal de synchronisation primaire et un signal de synchronisation secondaire, dans lequel L ≥ 1 ; l'ensemble de ressources comprend une pluralité de premières ressources candidates utilisées pour transmettre le premier bloc de signaux de synchronisation et au moins L secondes ressources candidates utilisées pour transmettre les L seconds blocs de signaux de synchronisation ; et

l'envoi, par le dispositif de réseau d'accès, de N seconds blocs de signaux de synchronisation dans les L seconds blocs de signaux de synchronisation au dispositif terminal sur N secondes ressources dans les au moins L secondes ressources candidates sur la base du résultat CCA, les N secondes ressources étant dans une correspondance biunivoque avec les N seconds blocs de signaux de synchronisation, 1 ≤ N ≤ L, et un canal sur une bande de fréquences sans licence correspondant à chacune des N secondes ressources se trouvant dans un état inactif.

2. Procédé selon la revendication 1, dans lequel un emplacement temporel de l'une quelconque de la pluralité de premières ressources candidates ne chevauche aucun emplacement temporel de l'une quelconque des au moins L secondes ressources candidates.

3. Procédé selon la revendication 1 ou 2, dans lequel il existe K x L secondes ressources candidates et K premières ressources candidates entre deux quelconques de la pluralité de premières ressources candidates, dans lequel K ≥ 1.

4. Procédé selon l'une quelconque des revendications 1 à 3, dans lequel chacun des L seconds blocs de signaux de synchronisation transmis en utilisant les L secondes ressources candidates comprend un canal de diffusion physique, PBCH, et le PBCH compris dans chacun des L seconds blocs de signaux de synchronisation présente une même charge utile.

5. Procédé selon l'une quelconque des revendications 1 à 4, dans lequel lorsque le dispositif de réseau d'accès ne transmet pas M seconds blocs de signaux de synchronisation dans les L seconds blocs de signaux de synchronisation dans la fenêtre temporelle prédéfinie dans la cellule, P secondes ressources candidates utilisées pour transmettre les M seconds blocs de signaux de synchronisation peuvent être utilisées comme premières ressources candidates pour transmettre le premier bloc de signaux de synchronisation, dans lequel 1 ≤ M ≤ L, et P ≥ M.

6. Procédé selon l'une quelconque des revendications 1 à 5, dans lequel le premier bloc de signaux de synchronisation transporte des premières informations d'indication de décalage, et les premières informations d'indication de décalage sont utilisées pour indiquer un intervalle de temps entre la pluralité de premières ressources candidates.

7. Procédé de transmission de bloc de signaux de synchronisation, comprenant :

la réception, par le dispositif terminal sur N secondes ressources dans au moins L secondes ressources candidates, N seconds blocs de signaux de synchronisation dans L seconds blocs de signaux de synchronisation envoyés par le dispositif de réseau d'accès, les N secondes ressources étant en correspondance biunivoque avec les N seconds blocs de signaux de synchronisation, et un canal sur une bande de fréquences sans licence correspondant à chacune des N secondes ressources se trouve dans un état inactif ; dans lequel

chaque bloc de signaux de synchronisation compris dans un ensemble de blocs de signaux de synchronisation qui comprend le premier bloc de signaux de synchronisation et les L seconds blocs de signaux de synchronisation comprend un signal de synchronisation primaire et un signal de synchronisation secondaire, dans lequel 1 ≤ N ≤ L, et un ensemble de ressources qui comprend la pluralité de premières ressources candidates et des au moins L secondes ressources candidates est un ensemble de ressources qui est déterminé par le dispositif de réseau d'accès et qui est utilisé pour la transmission de l'ensemble de blocs de signaux de synchronisation dans une fenêtre temporelle prédéfinie dans une cellule à l'aide d'une bande de fréquences sans licence ; et

la détermination, par le dispositif terminal, d'informations temporelles sur la base du premier bloc de signaux de synchronisation et/ou des N seconds blocs de signaux de synchronisation.

8. Procédé selon la revendication 7, dans lequel un emplacement temporel de l'une quelconque de la pluralité de premières ressources candidates ne chevauche aucun emplacement temporel de l'une quelconque des au moins L secondes ressources candidates.

**9.** Procédé selon la revendication 7 ou 8, dans lequel il existe K x L secondes ressources candidates et K premières ressources candidates entre deux quelconques de la pluralité de premières ressources candidates, dans lequel K ≥ 1.

**10.** Procédé selon l'une quelconque des revendications 7 à 9, dans lequel chacun des L seconds blocs de signaux de synchronisation transmis en utilisant les L secondes ressources candidates comprend un canal de diffusion physique PBCH, et le PBCH compris dans chacun des L seconds blocs de signaux de synchronisation présente une même charge utile.

**11.** Procédé selon l'une quelconque des revendications 7 à 10, dans lequel lorsque le dispositif de réseau d'accès ne transmet pas M seconds blocs de signaux de synchronisation dans les L seconds blocs de signaux de synchronisation dans la fenêtre temporelle prédéfinie dans la cellule, P secondes ressources candidates utilisées pour transmettre les M seconds blocs de signaux de synchronisation peuvent être utilisées comme premières ressources candidates pour transmettre le premier bloc de signaux de synchronisation, dans lequel 1 ≤ M ≤ L, et P ≥ M.

**12.** Procédé selon l'une quelconque des revendications 7 à 11, dans lequel le premier bloc de signaux de synchronisation transporte des premières informations d'indication de décalage, et les premières informations d'indication de décalage sont utilisées pour indiquer un intervalle de temps entre la pluralité de premières ressources candidates.

**13.** Dispositif de réseau d'accès, comprenant :

un processeur ; et
une mémoire, la mémoire stockant une instruction d'exécution ; et lorsque le processeur exécute l'instruction d'exécution pour permettre au dispositif d'exécuter le procédé selon l'une quelconque des revendications 1 à 6.

**14.** Équipement terminal, comprenant :

un processeur ; et
une mémoire, la mémoire stockant une instruction d'exécution ; et lorsque le processeur exécute l'instruction d'exécution pour permettre au dispositif de réaliser le procédé selon l'une quelconque des revendications 7 à 12.

**15.** Support de stockage lisible par ordinateur dans lequel est enregistré un programme ; le programme amenant un ordinateur à exécuter le procédé selon l'une quelconque des revendications 1 à 12.

Access network
device

Terminal device

FIG. 1

Synchronization signal burst set — First 10 ms — Slot: 0.5 ms — Second 10 ms

Resource 1  Resource 2  Resource 3  Resource 4  Resource 5  Resource 6

Resource 7  Resource 8

FIG. 2

EP 3 654 713 B1

Synchronization signal burst set **(SS Burst Set) periodicity: 10 ms**

**Time window: 5 ms**

| **Including SSB sending** | **Not including SSB sending** |
| --- | --- |

FIG. 3

Slot (Slot): 14 symbols

SSB 0

SSB 1

FIG. 4

FIG. 5

Synchronization signal burst **(burst ID = 1)**    Synchronization signal burst **(burst ID = 1)**

Synchronization signal burst
**(burst ID = 0)**    **Slot: 0.5 ms**    Synchronization signal burst
**(burst ID = 0)**

**Synchronization signal burst set
(SS Burst Set) periodicity**    **Synchronization signal burst set
(SS Burst Set) periodicity**

▨ **Resource 1**  ▦ **Resource 2**  ▧ **Resource 3**  ▨ **Resource 4**  ▯ **Resource 5**  ▯ **Resource 6**

▮ **Resource 7**  ▩ **Resource 8**

FIG. 6

EP 3 654 713 B1

Synchronization signal burst set **(SS Burst Set) periodicity: 10 ms**

**Time window: 5 ms**

Not including SSB sending

The SSB is no longer transmitted at the time location

**Determine that a channel on an unlicensed frequency band carrying the SSB is in an idle state**

▨ **Three time resources on which a "same" SSB can be transmitted**

⊟ **CCA regions corresponding to three time locations**

FIG. 7a

Synchronization signal burst set **(SS Burst Set) periodicity: 10 ms**

**Time window: 5 ms**

**Not including SSB sending**

**Determine that a channel on an unlicensed frequency band carrying the SSB is in an idle state**

**Determine that a channel on an unlicensed frequency band carrying the SSB is in a busy state**

▨ **Three time locations on which a "same" SSB can be transmitted**

⊟ **CCA regions corresponding to three time locations**

FIG. 7b

Synchronization signal burst set **(SS Burst Set) periodicity: 10 ms**

**Time window: 5 ms**

**Not including SSB sending**

**Determine that a channel on an unlicensed frequency band carrying the SSB is in an idle state**

**Determine that a channel on an unlicensed frequency band carrying the SSB is in a busy state**

▨ **Three time locations on which a "same" SSB can be transmitted**

⊟ **CCA regions corresponding to three time locations**

FIG. 7c

EP 3 654 713 B1

Synchronization signal burst set (SS Burst Set) periodicity

**Time window : 5 ms**

**Including SSB transmission**

...

Synchronization signal burst set (SS Burst Set) periodicity

**Time window : 5 ms**

**Including SSB transmission**

← Slot →

← Slot →

**Preset resource corresponding to an SSB time index 0 (SSB Time Index 0)**

**Preset resource corresponding to an SSB time index 1 (SSB Time Index 1)**

**Preset resource corresponding to an SSB time index 2 (SSB Time Index 2)**

**Preset resource corresponding to an SSB time index 3 (SSB Time Index 3)**

**Flexible resource corresponding to an SSB time index 0 (SSB Time Index 0)**

**Flexible resource corresponding to an SSB time index 1 (SSB Time Index 1)**

**Flexible resource corresponding to an SSB time index 2 (SSB Time Index 2)**

**Flexible resource corresponding to an SSB time index 3 (SSB Time Index 3)**

FIG. 8

Terminal
device

Access
network
device

S901: Determine a resource set
used for transmission of a
synchronization signal block set in
a preset time window in a cell using
an unlicensed frequency band

S902: Send a first synchronization signal block on a
first resource, and/or send N second synchronization
signal blocks on N second resources

S903: Determine time
information based on the first
synchronization signal block
and/or the N second
synchronization signal blocks

FIG. 9

**Preset time window: 5 ms**

| | | Candidate resource 1 | | Candidate resource 2 | | Candidate resource 3 | | Candidate resource 4 |
| --- | --- | --- | --- | --- | --- | --- | --- | --- |
| | | Candidate resource 5 | | Candidate resource 6 | | Candidate resource 7 | | Candidate resource 8 |

SSB time index
(SSB Time Index)   0   1   2   3        0   1   2   3

Offset relative to a   0   0   0   0        1   1   1   1
preset resource

FIG. 10

Preset time window: 5 ms

Candidate resource 1  Candidate resource 2  Candidate resource 3  Candidate resource 4

Candidate resource 5  Candidate resource 6  Candidate resource 7  Candidate resource 8

SSB time index
(SSB Time Index)   0   1   2   3          0 or 1   2 or 3

Offset relative to
a preset resource   0   0   0   0          1   1   1   1

FIG. 11

Preset time window: 5 ms

Including 10 resources used to transmit an SSB

Including 4 resources used to transmit an SSB

Including 3 resources used to transmit an SSB

Slot: 1 ms

0  1  2  3  0'  1'  2'  3'  0''  1''

Synchronization signal burst set

SSB time index (SSB time index):  0 1 2 3 0 1 2 3 0 1

Offset relative to a preset resource:  0 0 0 0 1 1 1 1 2 2

Resource used to transmit an SSB 0

Resource used to transmit an SSB 1

Resource used to transmit an SSB 2

Resource used to transmit an SSB 3

Resource used to transmit an SSB 0

Resource used to transmit an SSB 1

Resource used to transmit an SSB 2

Resource used to transmit an SSB 3

Preset resource

Flexible resource

FIG. 12

FIG. 13a

FIG. 13b

Preset time window: 5 ms

Including 10 resources used to transmit an SSB

Including 4 resources used to transmit an SSB

One slot: 1 ms

0  1  2  3  0'  1'  2'  3'  0"  1"

4

5

A channel on a corresponding unlicensed frequency band is in an idle state

Determining whether a channel on an unlicensed frequency band is in an idle state is not required before transmission

Determining whether a channel on an unlicensed frequency band is in an idle state is required before transmission and a channel on a corresponding unlicensed frequency band is in an idle state

Determining whether a channel on an unlicensed frequency band is in an idle state is not required before transmission

Half slot: 0.5 ms

One slot: 1 ms

Half slot: 0.5 ms

One slot: 1 ms

Two slots: 2 ms

FIG. 13c

EP 3 654 713 B1

Preset time window: 5 ms

Including 10 resources used to transmit an SSB

Including 4 resources used to transmit an SSB

One slot: 1 ms

0  1  2  3  0'  1'  2'  3'  0"  1"

A channel on a corresponding unlicensed frequency band is in a busy state

No transmission on the current resource

No transmission on the current resource

No transmission on the current resource

Half slot: 0.5 ms

Half slot: 0.5 ms

One slot: 1 ms

One slot: 1 ms

Two slots: 2 ms

FIG. 14a

EP 3 654 713 B1

Preset time window: 5 ms

Including 8 resources used to transmit an SSB

Including 4 resources used to transmit an SSB

One slot: 1 ms

A channel on a corresponding unlicensed frequency band is in a busy state

Transmission can still be performed on the current resource, but whether a channel is in an idle state or in a busy state needs to be determined

Depending on whether a corresponding channel is in an idle state or in a busy state or a transmission status of an SSB 1

Depending on whether a corresponding channel is in an idle state or in a busy state or a transmission status of an SSB 2

Half slot: 0.5 ms

One slot: 1 ms

Half slot: 0.5 ms

One slot: 1 ms

Two slots: 2 ms

FIG. 14b

Preset time window: 5 ms

Slot: 1 ms

| 0 | 1 | 0' | 1' | 2 | 3 | 2' | 3' | | |

Synchronization signal burst (SS Burst)

Synchronization signal burst (SS Burst)

SSB time index (SSB time index):    0 1 0 1 2 3 2 3

Offset relative to a preset resource    0 0 1 1 0 0 1 1

Resource used to transmit an SSB 0

Resource used to transmit an SSB 1

Resource used to transmit an SSB 2

Resource used to transmit an SSB 3

Preset resource

Resource used to transmit an SSB 0

Resource used to transmit an SSB 1

Resource used to transmit an SSB 2

Resource used to transmit an SSB 3

Flexible resource

FIG. 15

EP 3 654 713 B1

Preset time window: 5 ms

Including 8 resources used to transmit an SSB

Including 4 resources used to transmit an SSB

Slot: 1 ms

| 0 | 1 | 2 | 3 | | | 0' | 1' | 2' | 3' |

Synchronization signal burst set

Three resources used to transmit an SSB

**SSB time index (SSB time index):** 0 1 2 3 0 1 2 3

**Offset relative to a preset resource** 0 0 0 0 1 1 1 1

Resource used to transmit an SSB 0

Resource used to transmit an SSB 1

Resource used to transmit an SSB 2

Resource used to transmit an SSB 3

**Preset resource**

Resource used to transmit an SSB 0

Resource used to transmit an SSB 1

Resource used to transmit an SSB 2

Resource used to transmit an SSB 3

**Flexible resource**

FIG. 16

FIG. 17

FIG. 18a

Preset time window: 5 ms

Including 10 resources used to transmit an SSB

Including 4 resources used to transmit an SSB

Slot: 1 ms

| 0 | 1 | 2 | 3 | 0' | 1' | 2' | 3' | 0" | 1" |

Nominal SSB transmission

SSB time index (SSB time index): 0 1 2 3 0 1 2 3 0 1

Offset relative to a preset resource 0 0 0 0 1 1 1 1 2 2

Resource used to transmit an SSB 0
Resource used to transmit an SSB 1
Resource used to transmit an SSB 2
Resource used to transmit an SSB 3
Preset resource

Resource used to transmit an SSB 0
Resource used to transmit an SSB 1
Resource used to transmit an SSB 2
Resource used to transmit an SSB 3
Flexible resource

EP 3 654 713 B1

FIG. 18b

EP 3 654 713 B1

FIG. 19

FIG. 20

SSB time window: 5 ms

Synchronization signal burst (SS Burst)

Synchronization signal burst (SS Burst)

Candidate resource for transmitting an SSB 0

Candidate resource for transmitting an SSB 1

Candidate resource for transmitting an SSB 2

Candidate resource for transmitting an SSB 3

FIG. 21

FIG. 22

**Physical broadcast channel transmission time interval (PBCH TTI): 80 ms**

Synchronization signal burst set periodicity: **20 ms**

5 ms    5 ms    5 ms    5 ms

**Baseline (Baseline)**

1st slot: 1 ms (y = 14)      2nd slot: 1 ms (y = 14)

SSB 0     SSB 1     SSB 2   Padding (Padding)   SSB 3     5th slot: 1 ms (y = 14)

...

**If CCA fails**

1st slot: 1 ms (y = 14)      2nd slot: 1 ms (y = 14)      3rd slot: 1 ms (y = 14)

CCA detection fails, and a synchronization signal block A is not transmitted

SSB 0     SSB 1     SSB 2     SSB 3

◫ CCA detection corresponds to an idle channel

◫ CCA detection corresponds to a busy channel

FIG. 23

FIG. 24a

EP 3 654 713 B1

FIG. 24b

EP 3 654 713 B1

EP 3 654 713 B1

Demodulation reference signal
sequence change
(DMRS sequence change)

First cluster of
candidate resources

Second cluster of
candidate resources

Slot

| 1 | 2 | 3 | 4 | 1 | 2 | 3 | 4 | 1 | 2 | 3 | 4 | 1 | 2 | 3 | 4 |

Offset (Offset): 1

Preset time window: 5 ms

FIG. 24c

**First cluster of candidate resources**    **Second cluster of candidate resources**    **Third cluster of candidate resources**

Slot

| 1 | 2 | 3 | 4 | | 1 | 2 | 3 | 4 | | 1 | 2 | 3 | 4 |

Offset (Offset): 000          Offset (Offset): 001          Offset (Offset): 010

Preset time window: 5 ms

FIG. 24d

Preset time window: 5 ms

Including 10 resources used to transmit an SSB

Including 8 resources used to transmit an SSB

Slot: 1 ms

| 0 | 1 | 2 | 3 | 4 | 5 | 6 | 7 | | |

Nominal SSB transmission

SSB time index (SSB time index):
0 1 2 3 4 5 6 7 0 1

Offset relative to   0 0 0 0 0 0 0 0 1 1
a preset resource

Resource for transmitting an SSB 0

Resource for transmitting an SSB 1

Resource for transmitting an SSB 2

Resource for transmitting an SSB 3

Preset resource

Resource for transmitting an SSB 4

Resource for transmitting an SSB 5

Resource for transmitting an SSB 6

Resource for transmitting an SSB 7

Preset resource

Flexible resource

FIG. 25

EP 3 654 713 B1

First cluster of
candidate resources

Second cluster of
candidate resources

Third cluster of
candidate resources

← Slot →

| 1 | 2 | 3 | 4 | 5 | 6 | 7 | 8 | 1 | 2 | 3 | 4 | 5 | 6 | 7 | 8 | 1 | 2 | 3 | 4 |

Offset (Offset): 000 ——— Offset (Offset): 001 ——— Offset (Offset): 010

Preset time window: 5 ms

FIG. 26a

FIG. 26b

FIG. 27

**Two slots**

0.5 ms

| 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 | 9 | 10 | 11 | 12 | 13 | 14 | 15 | 16 |

One cluster of candidate resources

Offset (Offset): 1
Flexible resource

Offset (Offset): 0
Preset resource

Preset time window: 5 ms

FIG. 28a

EP 3 654 713 B1

**Two slots**

| 0.5 ms | | | | | | | | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|---|---|---|---|---|---|---|

One cluster of candidate resources

Offset (Offset): 0
Preset resource

Offset (Offset): 1
Flexible resource

Preset time window: 5 ms

FIG. 28b

2900

Access network device

2901

Processing unit

2902

Transceiver unit

FIG. 29

3000

Access network device

3001

Processor

3001

Processor

3004

3003

Communications interface

3002

Memory

FIG. 30

3100

Terminal device

3101                              3102

| Transceiver unit | Processing unit |

FIG. 31

3200

Terminal device

3201                              3201

| Processor | - - - - - | Processor |

3204

3203

| Communications interface |

3202

| Memory |

FIG. 32

**EP 3 654 713 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016119684 A1